(19) Europäisches Patentamt
European Patent Office
Office européen des brevets

(11) **EP 2 257 579 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **09721936.4**

(22) Anmeldetag: **20.03.2009**

(51) Int Cl.:
*C08F 230/02* (2006.01)    *C08F 220/18* (2006.01)
*C08L 43/02* (2006.01)    *C09D 143/02* (2006.01)
*C08K 5/521* (2006.01)    *C08F 2/26* (2006.01)

(86) Internationale Anmeldenummer:
**PCT/EP2009/053326**

(87) Internationale Veröffentlichungsnummer:
**WO 2009/115607 (24.09.2009 Gazette 2009/39)**

(54) **POLYMERDISPERSIONEN ENTHALTEND PHOSPHORHALTIGE POLYMERE UND EMULGATOREN**

POLYMER DISPERSIONS CONTAINING PHOSPHOROUS CONTAINING POLYMERS AND EMULSIFIERS

DISPERSIONS POLYMÈRES CONTENANT DES POLYMÈRES CONTENANT DU PHOSPHORE ET DES ÉMULSIFIANTS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.03.2008 EP 08153095**

(43) Veröffentlichungstag der Anmeldung:
**08.12.2010 Patentblatt 2010/49**

(73) Patentinhaber: **BASF SE**
**67056 Ludwigshafen am Rhein (DE)**

(72) Erfinder:
• **TERRENOIRE, Alexandre**
**68163 Mannheim (DE)**
• **TITMARSH, Chris**
**68165 Mannheim (DE)**
• **YAMASHITA, Hideki**
**Mie Pref., 5108101 (JP)**
• **YONG, Chee Seng**
**Luang, Johor, 86000 (MY)**
• **CHOWDHRY, Mubarik Mahmood**
**Singapore S-267358 (SG)**
• **KWAN, Mun Hoe (Stanley)**
**Singapore S-669565 (SG)**
• **ALLEN, Jonathan**
**North Balwyn Victoria (AU)**

(74) Vertreter: **BASF IP Association**
**BASF SE**
**G-FLP-C006**
**67056 Ludwigshafen (DE)**

(56) Entgegenhaltungen:
**EP-A- 1 832 635**    **EP-A- 1 997 839**
**EP-A1- 1 988 105**    **WO-A-2005/030495**
**WO-A-2005/097853**    **WO-A1-2006/026379**
**WO-A2-2009/085593**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft die Verwendung von Polymerdispersionen enthaltend wenigstens ein Polymer, das durch radikalische Emulsionspolymerisation wenigstens eines Esters der Phosphonsäure oder der Phosphorsäure mit einem gegebenenfalls alkoxylierten Hydroxyalkyl(meth)acrylat und einem davon verschiedenen ethylenisch ungesättigten Monomer erhältlich ist, und wenigstens einen Ester der Phosphorsäure mit einem gegebenenfalls alkoxylierten Alkanol in Anstrichmitteln zur Verbesserung der Eigenschaften von Anstrichen, erfindungsgemäß verwendete Polymerdispersionen sowie die Anstrichmittel enthaltend die erfindungsgemäßen Polymerdispersionen.

Die Qualität nicht pigmentierter und pigmentierter Anstrichmittel auf Basis wässriger Polymerdispersionen misst sich insbesondere an Glanz, Fleckbeständigkeit, Scheuerbeständigkeit, Polierbeständigkeit oder der Pigmentverteilung der daraus hergestellten Anstriche. Versuche diese Merkmale der Anstriche durch geeignete Zusätze in Anstrichmitteln zu verbessern sind daher zahlreich.

EP 0 960 889 beschreibt wässrige Polymerdispersionen, die durch Emulsionspolymerisation eines Monomerengemisches, enthaltend Alkyl(meth)acrylate Vinylester, Vinylaromaten oder deren Gemische, in Gegenwart eines Schutzkolloids, das ethylenisch ungesättigte, copolymerisierbare Monomere mit wenigstens einer Phosphat- oder Phosphonatgruppe eingebaut enthält, erhältlich sind sowie deren Verwendung als Bindemittel in Korrosionsschutzbeschichtungsmittel.

EP 1 274 738 beschreibt polymerisierbare grenzflächenaktive Verbindungen der Formel $R^1$-C(O)-$R^2$-X, worin $R^1$ ein gegebenenfalls substituierter Vinylrest, $R^2$ ein zweiwertiger Polyoxyalkylenrest und X eine Phosphatgruppe ist, und deren Salze sowie deren Verwendung zur Herstellung eines Emulsionspolymers.

EP 1 725 595 beschreibt wässrige Polymerdispersionen, deren Polymer aus einer Monomermischung erhältlich ist, die wenigstens ein ethylenisch ungesättigtes Monomer, das keine ionische Gruppe enthält, wenigstens ein ethylenisch ungesättigtes Monomer mit mindestens einer Carboxyl- und/oder Carbonsäureanhydridfunktion und wenigstens ein ethylenisch ungesättigtes Monomer mit wenigstens einer Phosphat-, Phosphonat- und/oder Phosphinatgruppe, enthält, wobei die wässrige Polymerdispersionen gegebenenfalls ein anionisches Tensid von Typ alkoxyliertes Alkylphosphat enthält, Beschichtungszusammensetzungen enthaltend solche Polymerdispersionen sowie deren Verwendung als Schutzbeschichtung für Metall- oder Kunststoffsubstrate.

EP 1 762 601 beschreibt die Verwendung anionischer Tenside, die ausgewählt sind unter Halbestern der Schwefel- oder der Phosphorsäure mit gegebenenfalls alkoxylierten $C_8$-$C_{30}$-Alkanolen oder $C_4$-$C_{30}$-Alkylphenolen zur Verbesserung der Fleckbeständigkeit wässriger Beschichtungszusammensetzungen.

EP 1 832 635 beschreibt Beschichtungszusammensetzungen, die wenigstens ein monoethylenisch ungesättigtes Monomer, wenigstens ein anionisches oder Säuregruppen umfassendes Monomer, wenigstens ein phosphorhaltiges Monomer und Titandioxid enthalten, sowie deren Verwendung zur Herstellung scheuer- und fleckbeständiger Beschichtungen. EP 1 997 839 A1 beschreibt Copolymere, welche unter anderem aus ethylenisch ungesättigten Monomeren aufgebaut sind, beispielsweise aus Styrol und Butylacrylat. Die konkret offenbarten Polymere enthalten mehr als 5 Gew.-% Styrol einpolymerisiert.

WO 2005/030495 A2 beschreibt ein Verfahren zum Beschichten von Oberflächen. Beispiel 5 beschreibt eine Emulsion eines Polymers, welches unter anderem mehr als 5 Gew.-% Styrol als Monomerkomponente enthält. Keine der in den Beispielen der gezeigten Dispersionen erfüllt die Bedingung, dass die 95 bis 99,99 Gew.-% der Monomere ausschließlich unter (M1.a) und (M1.b) ausgewählt sind.

WO 2005/097853 A1 beschreibt Polymerdispersionen und die Verwendung als Anstrichmittel. Keine der in den Beispielen der gezeigten Dispersionen erfüllt die Merkmale der anspruchsgemäßen Dispersionen. Alle in Tabelle 1 gezeigten Beispiele enthalten mehr als 9 Gew.-% Styrol.

WO 2006/026379 A1 beschreibt Dispersionen, welche wenigstens ein Copolymer und ein nichtwasserlösliches, metallisches Pigment enthalten. Die Beispiele 12 bis 14 enthalten jeweils mehr als 5 Gew.-% Styrol.

EP 1 988 105 A1 beschreibt Copolymerdispersionen, wobei das Copolymer unter anderem zwingend eine ethylenisch ungesättigtes Monomerkomponente, welche eine Alkoxysilanfunktionalität trägt und eine ethylenisch ungesättigtes Monomerkomponente, welche eine Schwefel-basierte Säuregruppe trägt, aufgebaut ist. Die Beispiele aus Tabelle 1, Einträge 5, 22 und 23 enthalten jeweils mehr als 54 % Styrol als Monomerkomponente.

WO 2009/085593 A2 betrifft auch Emulsionspolymerzusammensetzungen, bestehend aus (a) 0,05 - 8 Gew.-% eines polymersisierbaren Tensids, (b) 90,5 - 20 Gew.-% eines carbonylfunktionalisierten Monomers, (c) 0,1 -10 Gew.-% eines phosphoshaligen Monomers und (d) wenigstens einem ethylenisch ungesättigten Monomer.

WO 2009/085593 A2 offenbart nicht die Verwendung der Monomere M1 von 95 bis 99,99 Gew.-%, bezogen auf das Gesamtgewicht der zur Emulsionspolymerisation eingesetzten Monomere. Keines der zuvor genannten Dokumente beschreibt Anstriche, die gleichzeitig eine gute Fleckbeständigkeit , eine gute Scheuerbeständigkeit, eine gute Polierbeständigkeit und eine gute Pigmentverteilung aufweisen. Vielmehr sind die Anstriche gemäß Stand der Technik ausschließlich hinsichtlich jeweils einer dieser Eigenschaften optimiert. Zudem weisen die beschriebenen Anstrichmittel vielfach Zusätze auf, die noch eine gewisse Flüchtigkeit aufweisen, was sich negativ auf den Anteil an flüchtigen organischen Verbindungen (VOC) der daraus hergestellten Anstriche auswirkt.

Der vorliegenden Erfindung lag die Aufgabe zu Grunde, Polymerdispersionen für die Verwendung in Anstrichmitteln zur Verfügung zu stellen, die geeignet sind die Fleckbeständigkeit und/oder die Scheuerbeständigkeit und/oder die Polierbeständigkeit und/oder die Pigmentverteilung der daraus hergestellten Anstriche zu verbessern, ohne dabei in erheblichem Maße negativ auf eine andere dieser Eigenschaften einzuwirken. Nach Möglichkeit sollten die aus den Anstrichmitteln auf Basis dieser Polymerdispersionen hergestellten Anstriche einen möglicht geringen Anteil flüchtiger organischer Verbindungen (VOC) aufweisen.

Überraschenderweise wurde gefunden, dass diese Aufgabe durch die Verwendung von Polymerdispersionen, die wenigstens ein Polymer, das durch radikalische Emulsionspolymerisation wenigstens eines Esters der Phosphonsäure oder der Phosphorsäure mit einem gegebenenfalls alkoxylierten Hydroxyalkyl(meth)acrylat und einem davon verschiedenen ethylenisch ungesättigten Monomer erhältlich ist, und wenigstens einen Ester der Phosphonsäure oder der Phosphorsäure mit einem gegebenenfalls alkoxylierten Alkanol enthalten, in Anstrichmitteln, gelöst wird.

Ein erster Gegenstand der Erfindung betrifft daher die Verwendung, gemäß Anspruch 1, Polymerdispersion (PD), enthaltend:

i) wenigstens ein Polymer (P), erhältlich durch radikalische Emulsionspolymerisation wenigstens eines ethylenisch ungesättigten Monomers (M1) und wenigstens eines davon verschiedenen Monomers (M2), das ausgewählt ist unter Estern der Phosphonsäure oder der Phosphorsäure mit gegebenenfalls alkoxylierten Hydroxyalkyl(meth)acrylaten, und

ii) wenigstens einen Emulgator (E), ausgewählt unter Verbindungen der Formel (I)

$$R^1\text{-}O\text{-}(AO)_m\text{-}P(=O)(OR^2)(OH) \qquad\qquad (I)$$

worin

m       für eine ganze Zahl von 0 bis 20 steht,
AO      für Alkylenoxy steht,
$R^1$      für $C_8$-$C_{30}$-Alkyl steht und
$R^2$      für H oder eine Gruppe -$(AO)_m R^{2a}$ steht, worin $R^{2a}$ die für $R^1$ gegebene Bedeutung aufweist und AO und m eine der zuvor gegebenen Bedeutun-gen aufweisen,

und den Salzen der Verbindungen der Formel (I);
in Anstrichmitteln zur Verbesserung der Scheuerbeständigkeit der daraus hergestellten Anstriche und/oder zur Verbesserung der Polierbeständigkeit der daraus hergestellten Anstriche und/oder zur Verbesserung der Fleckbeständigkeit der daraus hergestellten Anstriche und/oder zur Verbesserung der Pigmentverteilung in den daraus hergestellten Anstrichen und/oder zur Verringerung der Emission von flüchtigen organischen Verbindungen durch die daraus hergestellten Anstriche.

Durch die erfindungsgemäße Verwendung der Polymerdispersionen (PD) in Anstrichmitteln werden Anstriche erhalten, die üblicherweise neben einer guten Fleckbeständigkeit (stain resistance) auch eine gute Polierbeständigkeit, eine gute Scheuerbeständigkeit und/oder eine gute Pigmentverteilung aufweisen. Zudem weisen sowohl die erfindungsgemäß verwendeten Polymerdispersionen (PD) als auch die daraus hergestellten Anstrichmittel und Anstriche üblicherweise einen geringen Anteil flüchtiger organischer Verbindungen (VOC) auf.

Demzufolge betrifft ein weiterer Gegenstand der vorliegenden Erfindung die Verwendung einer Polymerdispersion (PD), wie zuvor definiert, zur Verbesserung der Scheuerbeständigkeit der daraus hergestellten Anstriche.

Ein weiterer Gegenstand der vorliegenden Erfindung betrifft die Verwendung einer Polymerdispersion (PD), wie zuvor definiert, zur Verbesserung der Polierbeständigkeit der daraus hergestellten Anstriche.

Ein weiterer Gegenstand der vorliegenden Erfindung betrifft die Verwendung einer Polymerdispersion (PD), wie zuvor definiert, zur Verbesserung der Fleckbeständigkeit der daraus hergestellten Anstriche.

Ein weiterer Gegenstand der vorliegenden Erfindung betrifft die Verwendung einer Polymerdispersion (PD), wie zuvor definiert, zur Verbesserung der Pigmentverteilung in den daraus hergestellten Anstrichen

Ein weiterer Gegenstand der vorliegenden Erfindung betrifft die Verwendung einer Polymerdispersion (PD), wie zuvor definiert, zur Verringerung der Emission von flüchtigen organischen Verbindungen durch die daraus hergestellten Anstriche.

Ein weiterer Gegenstand der Erfindung betrifft Anstrichmittel, gemäß Anspruch 11, enthaltend eine Polymerdispersion (PD), wobei die Polymerdispersion (PD):

i) wenigstens ein Polymer (P), erhältlich durch radikalische Emulsionspolymerisation wenigstens eines ethylenisch ungesättigten Monomers (M1) und wenigstens eines davon verschiedenen Monomers (M2), das ausgewählt ist unter Estern der Phosphonsäure oder der Phosphorsäure mit gegebenenfalls alkoxylierten Hydroxyalkyl(meth)acrylaten, und

ii) wenigstens einen Emulgator (E), ausgewählt unter Verbindungen der Formel (I)

$$R^1\text{-O-}(AO)_m\text{-P(=O)}(OR^2)(OH) \qquad (I)$$

worin

m für eine ganze Zahl von 0 bis 20 steht,
AO für Alkylenoxy steht,
$R^1$ für $C_8$-$C_{30}$-Alkyl steht und
$R^2$ für H oder eine Gruppe $-(AO)_m R^{2a}$ steht, worin $R^{2a}$ die für $R^1$ gegebene Bedeutung aufweist und AO und m eine der zuvor gegebenen Bedeutungen aufweisen,

und den Salzen der Verbindungen der Formel (I), enthält; und
wobei die Polymerdispersionen (PD) zur Verbesserung der Scheuerbeständigkeit von aus den Anstrichmitteln hergestellten Anstrichen und/oder zur Verbesserung der Polierbeständigkeit von aus den Anstrichmitteln hergestellten Anstrichen und/oder zur Verbesserung der Fleckbeständigkeit von aus den Anstrichmitteln hergestellten Anstrichen und/oder zur Verbesserung der Pigmentverteilung in aus den Anstrichmitteln hergestellten Anstrichen und/oder zur Verringerung der Emission von flüchtigen organischen Verbindungen durch aus den Anstrichmitteln hergestellten Anstrichen eingesetzt wird.

Weitere Gegenstände der Erfindung sind die im Folgenden beschriebenen, bevorzugt verwendeten Polymerdispersionen (PD) sowie Anstrichmittel in Form einer wässrigen Zusammensetzung, enthaltend wenigstens eine erfindungsgemäß verwendete und erfindungsgemäße Polymerdispersion (PD).

Im Rahmen der vorliegenden Erfindung umfasst der Ausdruck "Alkyl" geradkettige und verzweigte Alkylgruppen, speziell mit 1 bis 30 Kohlenstoffatomen, d.h. für "$C_1$-$C_{30}$-Alkyl".

Geeignete kurzkettige Alkylgruppen sind beispielsweise geradkettige oder verzweigte $C_1$-$C_7$-Alkyl-, bevorzugt $C_1$-$C_6$-Alkyl- und besonders bevorzugt $C_1$-$C_4$-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl etc.

Geeignete längerkettige Alkylgruppen sind beispielsweise geradkettige und verzweigte $C_8$-$C_{30}$-Alkylgruppen, bevorzugt $C_8$-$C_{20}$-Alkylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen. Dazu zählen beispielsweise n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl und n-Nonadecyl. Der Ausdruck Alkyl umfasst unsubstituierte und substituierte Alkylreste.

Die vorstehenden Ausführungen zu Alkyl gelten sinngemäß auch für die Alkylgruppen in Alkanol, Alkandiol und Aminoalkanol.

Der Ausdruck "Alkylen", wie in Alkylenoxy verwendet, steht für geradkettige oder verzweigte Alkandiyl-Gruppen, bevorzugt mit 1 bis 7 Kohlenstoffatomen, wie beispielsweise Methylen, 1,2-Ethylen, 1,2-Propylen, 1,3-Propylen, 1,2-Butylen, 1,3-Butylen, 1,4-Butylen, 2-Methyl-1,2-propylen, etc.

Als "Salze der Verbindungen der Formel (I)" werden im Rahmen der vorliegenden Erfindung Verbindungen bezeichnet, die aus dem Phosphat-Anion oder unter der Bedingung, dass $R^2$ für H steht gegebenenfalls aus dem Phosphat-Dianion der Verbindungen der Formel (I) und geeigneten Kation-Äquivalenten bestehen. Bevorzugt bestehen die Salze der Verbindungen der Formel (I) aus dem einfach negativ geladenen Phosphat-Anion und einem Kationen-Äquivalent. Bevorzugt ist das Kationen-Äquivalent ausgewählt unter Kationen von Alkalimetalle, wie Lithium, Natrium und Kalium, Kationen von Erdalkalimetalle, wie Calcium oder Magnesium, und Ammoniumionen ($NH_4^+$), besonders bevorzugt unter Natrium- und/oder Kalium-Kationen.

Der Ausdruck "Fleckbeständigkeit" (stain resistance, Schmutzbeständigkeit) wird im Rahmen dieser Erfindung auch Reinigungsfähigkeit oder speziell Abwaschbarkeit verstanden. Sie bezeichnet im Rahmen der vorliegenden Erfindung die Befähigung eines Anstrichs, nach Kontakt mit einem Anfärbemittel, wie Stempelfarbe, Tinte, Buntstift, Lippenstift oder Senf oder farbstoffhaltigen Getränken, z.B. Rotwein, Kaffee, Tee und Ähnlichen, und Reinigung nur eine geringe Verschmutzung aufzuweisen. Zur Bestimmung der Fleckbeständigkeit kann zunächst ein Testanstrich aus einem Anstrichmittel hergestellt werden, das eine Polymerdispersion enthält, die auf wenigstens einem ethylenisch ungesättigten phosphorhaltigen Monomer M2) und wenigstens einem phosphorhaltigen Emulgator (E) beruht. Dieser Anstrich wird dann mit einem Anfärbemittel in Kontakt gebracht, wobei es sich um eine für die Bestimmung der Fleckbeständigkeit übliche Verunreinigung handelt. Nach einer Einwirkzeit wird das Anfärbemittel abgewaschen und der Anstrich unter standardisierten Bedingungen feucht gescheuert. Die Fleckbeständigkeit kann durch Angabe der delta E-Werte (dE-Werte) charakterisiert werden. Die delta E-Werte dienen der Angabe von Farbdifferenzen von zwei Messflächen, wobei das CIE L*a*b* Farbsystem verwendet werden kann. Der delta E-Wert gibt die Farbdifferenz zwischen einem nicht angefärbten Bereich einer Probe und einem angefärbten Bereich einer Probe als positive Zahl wieder. Je kleiner der delta E-Wert ist, desto geringer ist die Farbdifferenz und desto besser die Fleckbeständigkeit des geprüften Anstrichs. Farbmessungen über delta E-Werte unter Verwendung üblicher Spektrophotometer sind dem Fachmann bekannt und werden z.B. in AATCC Evaluation Procedure 7, "Instrumental Assessment of the Change in Color of a Test Specimen" beschrieben. In der Regel werden mehrere Versuche mit verschiedenen Standardanfärbemitteln durchgeführt. Unter Verbesserung der Fleckbeständigkeit versteht der Fachmann eine Verringerung der Anfärbbarkeit, meßbar z.B. durch einen geringeren delta E-Wert. Anstrichmittel, die eine Polymerdispersion enthalten, die auf wenigstens einem ethylenisch ungesättigten phosphorhaltigen Monomer M2) und wenigstens einem phosphorhaltigen Emulgator (E) beruht, eignen sich speziell für einen Einsatz in abwaschbaren Farben.

Der Ausdruck "Scheuerbeständigkeit" bezeichnet im Rahmen der vorliegenden Erfindung die Befähigung eines Anstrichs, bei Beanspruchung durch Scheuern nur wenig Abrieb aufzuweisen. Die Bestimmung kann z.B. durch Bestimmung der Nassabriebbeständigkeit nach DIN EN ISO 11998 (Oktober 2006) erfolgen. Diese Norm legt ein Verfahren zum Bestimmen der Nassabriebbeständigkeit fest. In Abhängigkeit vom Schichtdickenverlust erfolgt eine Einteilung in Klassen (z.B. Klassen 1 bis 5, Klasse 1: am besten, Klasse 5: am schlechtesten). Die Klasseneinteilung kann nach DIN EN 13300 erfolgen (Klasse 1: weniger als 5 $\mu$m bei 200 Scheuerzyklen, Klasse 2: gleich oder mehr als 5 $\mu$m und weniger als 20 $\mu$m bei 200 Scheuerzyklen, Klasse 3: gleich oder mehr als 20 $\mu$m und weniger als 70 $\mu$m bei 200 Scheuerzyklen, Klasse 4: weniger als 70 $\mu$m bei 40 Scheuerzyklen, Klasse 5: gleich oder mehr als 70 $\mu$m bei 40 Scheuerzyklen). Alternativ dazu kann die Bestimmung der Scheuerbeständigkeit (scrub resistance) nach ASTM D 2486 erfolgen. Unter Verbesserung der Scheuerbeständigkeit versteht der Fachmann eine Verringerung des Abriebs, meßbar z.B. durch eine verringerte Schichtdickenabnahme eines Anstrichs, oder einer Erhöhung der Anzahl erforderlicher Scheuerzyklen, um einen Anstrich durchzuscheuern.

Der Ausdruck "Polierbeständigkeit" bezeichnet im Rahmen der vorliegenden Erfindung die Befähigung eines Anstrichs, den Glanzgrad bei trockenem Reiben weitgehend konstant zu halten. Eine solche Glanzerhöhung ist speziell bei matten Anstrichen unerwünscht. Zur Bestimmung der Polierbeständigkeit (burnish resistance) kann zunächst eine Probebeschichtung aus einem Anstrichmittel hergestellt werden, das eine Polymerdispersion enthält, die auf einem ethylenisch ungesättigten phosphorhaltigen Monomer M2) und wenigstens einem phosphorhaltigen Emulgator (E) beruht. Von dieser Beschichtung wird dann der Glanz nach DIN EN ISO 2813 bestimmt. Die Beschichtung wird dann einer Scheuerbelastung in einem Scheuergerät nach DIN EN ISO 11998 (Oktober 2006) unterzogen. Anschließend wird erneut der Glanz bestimmt. Je kleiner die Differenz der Glanzwerte (d.h. der delta Glanz-Wert) ist, desto besser ist die Polierbeständigkeit des geprüften Anstrichs.

Anstriche aus Anstrichmitteln, die eine Polymerdispersionen enthalten, die auf einem ethylenisch ungesättigten phosphorhaltigen Monomer M2) und wenigstens einem phosphorhaltigen Emulgator (E) beruht, zeichnen sich in vorteilhafter Weise durch ausgewogene anwendungstechnische Eigenschaften hinsichtlich der Fleckbeständigkeit, der Scheuerbeständigkeit und der Polierbeständigkeit aus. D.h. in der Regel weisen alle diese Eigenschaften gute Werte auf, wobei insbesondere nicht die Verbesserung hinsichtlich einer Eigenschaft eine deutliche Verschlechterung hinsichtlich einer anderen Eigenschaft bedeutet.

Der Ausdruck "Pigmentverteilung" bezeichnet im Rahmen der vorliegenden Erfindung die Homogenität der Anordnung der Pigmente in den erfindungsgemäßen Polymerdispersionen, den Anstrichmitteln sowie in den daraus erhältlichen Anstrichen. Die Pigmentverteilung lässt sich beispielsweise in erster Näherung über die Polierbeständigkeit bestimmen.

Der Ausdruck "flüchtige organische Verbindung" (VOC) bezeichnet im Rahmen der vorliegenden Erfindung organische Verbindungen, die einen Siedepunkt < 250 °C (bei Normaldruck) aufweisen. Während den Beschichtungsmitteln gemäß Stand der Technik häufig solche flüchtigen organischen Verbindungen beispielsweise in Form von Weichmachern zugesetzt werden, enthalten die Polymerdispersionen sowie die daraus hergestellten Anstrichmittel üblicherweise weniger 150 g/l und häufig weniger 50 g/l flüchtiger organischer Verbindungen.

Die erfindungsgemäß verwendete Polymerdispersion (PD) enthält wenigstens ein durch radikalische Emulsionspolymerisation wenigstens eines ethylenisch ungesättigten Monomers (M1) und wenigstens eines davon verschiedenen Monomers (M2) erhältliches Polymer (P). Die Polymere (P) sind durch eine Emulsionspolymerisation erhältlich, bei der der Anteil der Monomere (M1) im Bereich von 95 bis 99,99 Gew.-%, besonders bevorzugt im Bereich von 98 bis 99,9 Gew.-% uns ganz besonders bevorzugt im Bereich von 99 bis 99,8 Gew.-%, jeweils bezogen auf das Gesamtgewicht der zur Emulsionspolymerisation eingesetzten Monomere, liegt. Die Polymere (P) sind durch eine Emulsionspolymerisation erhältlich bei der der Hauptanteil der Monomere (M1) (im Folgenden als Hauptmonomere (M1.a) bezeichnet), d.h. mindestens 50 Gew.-%, bevorzugt mindestens 60 Gew.-% und besonders bevorzugt mindestens 80 Gew.-%, bezogen auf das Gesamtgewicht der Monomere (M1), ausgewählt ist unter den Estern $\alpha,\beta$-ethylenisch ungesättigter Mono- und Dicarbonsäuren mit $C_1$-$C_{30}$-Alkanolen, Estern von Vinyl- oder Allylalkohol mit $C_1$-$C_{30}$-Monocarbonsäuren, ethylenisch ungesättigten Nitrilen, Vinylhalogeniden, Vinylidenhalogenidenund Mischungen davon.

Besonders bevorzugt ist das Polymer (P) durch eine Emulsionspolymerisation erhältlich, bei der mindestens 50 Gew.-%, bevorzugt mindestens 60 Gew.-% und besonders bevorzugt mindestens 80 Gew.-% der Monomere (M1), bezogen auf das Gesamtgewicht der Monomere (M1), ausgewählt sind unter Estern $\alpha,\beta$-ethylenisch ungesättigter Mono- und Dicarbonsäuren mit $C_1$-$C_{30}$-Alkanolen.

Besonders bevorzugt sind die Hauptmonomere (M1.a) dann ausgewählt unter Estern $\alpha,\beta$-ethylenisch ungesättigter Mono- und Dicarbonsäuren mit $C_1$-$C_{30}$-Alkanolen, speziell unter Methyl(meth)acrylat, Ethyl(meth)acrylat, n-Propyl(meth)acrylat, Isopropyl(meth)acrylat, n-Butyl(meth)acrylat, sec.-Butyl(meth)acrylat, tert.-Butyl(meth)acrylat, n-Pentyl(meth)acrylat, n-Hexyl(meth)acrylat, n-Heptyl(meth)acrylat, n-Octyl(meth)acrylat, 2-Ethylhexyl(meth)acrylat und Mischungen davon.

Eine besonders geeignete Mischung von Hauptmonomeren (M1.a) für das erfindungsgemäße Verfahren ist beispielsweise n-Butylacrylat mit Methylmethacrylat.

Der Nebenanteil der Monomere (M1) (im Folgenden als Nebenmonomere (M1.b) bezeichnet), d.h. weniger als 50 Gew.-%, bevorzugt weniger als 40 Gew.-% und besonders bevorzugt weniger als 20 Gew.-%, bezogen auf das Gesamtgewicht der Monomere (M1), ist bevorzugt ausgewählt unter ethylenisch ungesättigten Mono- und Dicarbonsäuren und den Anhydriden und Halbestern ethylenisch ungesättigter Dicarbonsäuren, (Meth)acrylamiden, $C_1$-$C_{10}$-Hydroxyalkyl(meth)acrylaten, $C_1$-$C_{10}$-Hydroxyalkyl(meth)acrylamiden und Mischungen davon. Besonders bevorzugt sind die Nebenmonomere (M1.b) ausgewählt unter Acrylsäure, Methacrylsäure, Itaconsäure, Maleinsäure, Fumarsäure, Maleinsäureanhydrid, Acrylsäureamid, Methacrylsäureamid, und Mischungen davon.

Üblicherweise werden die Nebenmonomere (M1.b), sofern vorhanden, in einer Menge von wenigstens 0,1 Gew.-%, bevorzugt wenigstens 0,5 Gew.-% und besonders bevorzugt wenigstens 1 Gew.-%, bezogen auf das Gesamtgewicht der Monomere (M1), zur Emulsionspolymerisation eingesetzt.

Die zuvor genannte besonders geeigneten Mischung von Hauptmonomeren (M1.a) kann bevorzugten mit Nebenmonomeren (M1.b) kombiniert werden, die insbesondere ausgewählt sind unter Acrylsäure, Methacrylsäure, Acrylamid, Methacrylamid und Mischungen davon. Die Monomere (M1) sind ausschließlich ausgewählt unter den Hauptmonomeren (M1.a) und den Nebenmonomeren (M1.b). Erfindungsgemäß ist das Polymer (P) durch radikalische Emulsionspolymerisation wenigstens eines der zuvor beschriebenen Monomere (M1) und wenigstens eines davon verschiedenen Monomers (M2) erhältlich.

Üblicherweise wird man zur Bereitstellung des Polymers (P) durch Emulsionspolymerisation bis zu 5 Gew.-%, bevorzugt bis zu 2 Gew.-%, besonders bevorzugt bis zu 1 Gew.-%, wenigstens eines Monomers (M2), bezogen auf das Gesamtgewicht der eingesetzten Monomere, einsetzen. Weiterhin wird man zur Bereitstellung des Polymers (P) durch Emulsionspolymerisation wenigstens 0,01 Gew.-%, bevorzugt wenigstens 0,1 Gew.-%, besonders bevorzugt wenigstens 0,2 Gew.-%, des wenigstens einen Monomers (M2), bezogen auf das Gesamtgewicht der eingesetzten Monomere, einsetzen.

Geeignete Monomere (M2) sind die Ester, d.h. Mono- und Diester, der Phosphonsäure oder der Phosphorsäure mit Hydroxyalkyl(meth)acrylaten, speziell die Monoester. Häufig werden die Mono- und Diester der Phosphonsäure oder der Phosphorsäure nebeneinander vorliegen. In einer speziellen Ausführungsform der vorliegenden Erfindung werden die Monomere (M2) ein Gemisch von Mono- und Diestern der Phosphonsäure oder der Phosphorsäure sein.

Geeignete Monomere (M2) sind auch die Diester der Phosphonsäure oder der Phosphorsäure, die einfach mit einem Hydroxyalkyl(meth)acrylat und zusätzlich einfach mit einem davon verschiedenen Alkohol, z. B. mit einem $C_1$-$C_{30}$-Alkanol, verestert sind. Geeignete Hydroxyalkyl(meth)acrylat-Bestandteile der Monomere (M2) sind die im Folgenden als separate Monomere genannten, insbesondere 2-Hydroxyethyl(meth)-acrylat, 2-Hydroxypropyl(meth)acrylat, 3-Hydroxypropyl(meth)acrylat, 2-Hydroxybutyl(meth)acrylat, 3-Hydroxybutyl(meth)acrylat, 4-Hydroxybutyl-(meth)acrylat, etc. Entsprechende Dihydrogenphosphatestermonomere umfassen Phosphoalkyl(meth)acrylate, wie 2-Phosphoethyl(meth)acrylat, 2-Phosphopropyl(meth)acrylat, 3-Phosphopropyl(meth)acrylat, Phosphobutyl(meth)-acrylat und 3-Phospho-2-hydroxypropyl(meth)acrylat.

Geeignete Monomere (M2) sind auch die Ester der Phosphonsäure oder der Phosphorsäure mit alkoxylierten Hydroxyalkyl(meth)acrylaten, z. B. die Ester der Phosphonsäure oder der Phosphorsäure mit Ethylenoxidkondensaten von (Meth)acrylaten, wie $H_2C=CH\text{-}C(=O)O(CH_2CH_2O)_nP(OH)_2$, $H_2C=CH\text{-}C(=O)O(CH_2CH_2O)_nP(=O)(OH)_2$, $H_2C=C(CH_3)C(=O)O(CH_2CH_2O)_nP(OH)_2$ und $H_2C=C(CH_3)C(=O)O(CH_2CH_2O)_nP(=O)(OH)_2$, worin n für eine Zahl von 1 bis 20 steht.

Bevorzugte Monomere (M2) sind Ester der Phosphorsäure mit gegebenenfalls alkoxylierten Hydroxyalkyl(meth)acrylaten und Mischungen davon. Besonders bevorzugte Monomere (M2) sind die Monoestern der Phosphorsäure mit gegebenenfalls alkoxylierten Hydroxyalkyl(meth)acrylaten.

Besonders bevorzugt enthalten die Polymere (P) eine Kombination aus Acrylsäure und wenigstens einem Ester der Phosphorsäure mit einem Ethylenoxidkondensat der Methacrylsäure der Formel $H_2C=C(CH_3)C(=O)O(CH_2CH_2O)_nP(=O)(OH)_2$, worin n für eine Zahl von 1 bis 20 steht, einpolymerisiert. Ein bevorzugt geeigneter Methacrylsäureester eines Phosphorsäureendmodifizierten Polyethylenglycols der Formel $(CH2=C(CH_3)C(=O)O(CH_2CH_2O)_7-P(=O)(OH)_2$ ist unter der Bezeichnung Sipomer PAM 100 von der Fa. Rhodia erhältlich.

Die Polymere (P) weisen vorzugsweise einen Faktor F im Bereich von mehr als 0,4 bis 0,6, besonders bevorzugt von 0,405 bis 0,55 auf, wobei F das Monomergewichtmengenverhältnis M2/(MS + M2) bezeichnet und MS für die Gewichtsteile der ethylenisch ungesättigten Monomere, die wenigstens eine der folgenden Gruppen aufweisen: Carboxylgruppen, Carbonsäureanhydridgruppen oder Sulfonsäuregruppen, steht. M2 bezeichnet die Monomere, die ausgewählt sind unter Estern der Phosphonsäure oder der Phosphorsäure mit gegebenenfalls alkoxylierten Hydroxyalkyl(meth)acrylaten.

Berechnung des Faktors F:

$$F = \frac{M2}{MS + M2}$$

(mit F = mehr als 0,4 bis 0,6, besonders bevorzugt F = 0,405 bis 0,55)

In einer speziellen Ausführungsform:

$$F = \frac{M2}{Acrylsäure + M2}$$

mit $M2 = H_2C=C(CH_3)C(=O)O(CH_2CH_2O)_nP(=O)(OH)_2$ und n = 1 bis 20 und F = mehr als 0,4 bis 0,6, besonders bevorzugt F = 0,405 bis 0,55.

Die Polymere (P) bestehen bevorzugt zu wenigstens 95,01 Gew.-%, besonders bevorzugt zu wenigstens 98,1 Gew.-% und ganz besonders bevorzugt zu wenigstens 99,2 Gew.-%, jeweils bezogen auf das Gesamtgewicht der Polymere (P), aus den Monomeren (M1) und (M2) in einpolymerisierter Form und insbesondere aus den zuvor als bevorzugt genannten Monomeren (M1) und (M2) in einpolymerisierter Form. Die Polymere (P) bestehen in einer speziellen Ausführung nur aus den Monomeren (M1) und (M2) in einpolymerisierter Form.

Bei der Herstellung der erfindungsgemäß verwendeten Polymere (P) kann zusätzlich zu den zuvor genannten Monomeren (M1) und (M2) wenigstens ein Vernetzer eingesetzt werden.

Monomere, die eine vernetzende Funktion besitzen, sind Verbindungen mit mindestens zwei polymerisierbaren, ethylenisch ungesättigten, nichtkonjugierten Doppelbindungen im Molekül.

Eine Vernetzung kann auch z. B. durch photochemische Aktivierung erfolgen. Dazu kann zur Herstellung der Polymere (P) zusätzlich wenigstens ein Monomeren mit photoaktivierbaren Gruppen eingesetzt werden. Photoinitiatoren können auch separat zugesetzt werden.

Eine Vernetzung kann auch z. B. durch funktionelle Gruppen erfolgen, welche mit dazu komplementären funktionellen Gruppen eine chemische Vernetzungsreaktion eingehen können. Dabei können die komplementären Gruppen beide an das Emulsionspolymerisat gebunden sein. Zur Vernetzung kann ein Vernetzer eingesetzt werden, der befähigt ist, mit funktionellen Gruppen des Emulsionspolymerisats eine chemische Vernetzungsreaktion einzugehen.

Geeignete Vernetzer sind z. B. Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen.

Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäure-neopentylglykolmonoester, 2,2-Bis(4-hydroxyphenyl)-propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiapentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Cyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten $C_3$-$C_6$-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellithsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet als Vernetzer sind außerdem geradkettige oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z. B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 bis 20 000.

Als Vernetzer sind ferner geeignet die Acrylsäureamide, Methacrylsäureamide und N-Allylamine von mindestens zweiwertigen Aminen. Solche Amine sind z. B. 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren, wie Acrylsäure, Methacrylsäure, Itaconsäure, Maleinsäure, oder mindestens zweiwertigen Carbonsäuren, wie sie oben beschrieben wurden.

Ferner sind Triallylamin und Triallylmonoalkylammoniumsalze, z. B. Triallylmethylammoniumchlorid oder -methylsulfat, als Vernetzer geeignet.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid, z. B. N,N'-Divinylethylenharnstoff oder N,N'-Divinylpropylenharnstoff.

Weitere geeignete Vernetzer sind Divinyldioxan, Tetraallylsilan oder Tetravinylsilan. Selbstverständlich können auch Mischungen der vorgenannten Verbindungen eingesetzt werden. Vorzugsweise werden wasserlösliche Vernetzer eingesetzt.

Weiterhin zählen zu den vernetzenden Monomeren auch solche, die neben einer ethylenisch ungesättigten Doppelbindung eine reaktive funktionelle Gruppe, z. B. eine Aldehydgruppe, eine Ketogruppe oder eine Oxirangruppe aufweisen, die mit einem zugesetzten Vernetzer reagieren können. Vorzugsweise handelt es sich bei den funktionellen Gruppen um Keto- oder Aldehydgruppen. Die Keto- oder Aldehydgruppen sind vorzugsweise durch Copolymerisation von copolymerisierbaren, ethylenisch ungesättigten Verbindungen mit Keto- oder Aldehydgruppen an das Polymer gebunden. Geeignete derartige Verbindungen sind Acrolein, Methacrolein, Vinylalkylketone mit 1 bis 20, vorzugsweise 1 bis 10 Kohlenstoffatome im Alkylrest, Formylstyrol, (Meth-)acrylsäurealkylester mit ein oder zwei Keto- oder Aldehyd-, bzw. einer Aldehyd- und einer Ketogruppe im Alkylrest, wobei der Alkylrest vorzugsweise insgesamt 3 bis 10 Kohlenstoffatome umfasst, z. B. (Meth)acryloxyalkylpropanale, wie sie in der DE-A-2722097 beschrieben sind. Des Weiteren eignen sich auch N-Oxoalkyl(meth)acrylamide wie sie z. B. aus der US-A-4226007, der DE-A-2061213 oder DE-A-2207209 bekannt sind. Besonders bevorzugt sind Acetoacetyl(meth)acrylat, Acetoacetoxyethyl(meth)acrylat und insbesondere Diacetonacrylamid. Bei den Vernetzern handelt es sich vorzugsweise um eine Verbindung mit mindestens zwei funktionellen Gruppen, insbesondere zwei bis fünf funktionellen Gruppen, die mit den funktionellen Gruppen des Polymerisats, speziell den Keto- oder Aldehydgruppen, eine Vernetzungsreaktion eingehen können. Dazu zählen z. B. Hydrazid-, Hydroxylamin- oder Oximether- oder Aminogruppen als funktionelle Gruppen für die Vernetzung der Keto- oder Aldehydgruppen. Geeignete Verbindungen mit Hydrazidgruppen sind z. B. Polycarbonsäurehydrazide mit einem Molgewicht von bis zu 500 g/mol. Besonders bevorzugte Hydrazidverbindungen sind Dicarbonsäuredihydrazide mit bevorzugt 2 bis 10 C-Atomen. Dazu zählen z. B. Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebazinsäuredihydrazid und Isophthalsäuredihydrazid. Geeignete Verbindungen mit Hydroxylamin- oder Oximethergruppen sind z. B. in WO 93/25588 genannt.

Auch durch eine entsprechende Additivierung der wässrigen Polymerdispersion (PD) kann zusätzlich eine Oberflächenvernetzung erzeugt werden. Dazu zählt z. B. Zugabe eines Photoinitiators oder Sikkativierung. Als Photoinitiatoren kommen solche in Frage, die durch Sonnenlicht angeregt werden, beispielsweise Benzophenon oder Benzophenonderivate. Zur Sikkativierung eignen sich die für wässrige Alkydharze empfohlenen Metallverbindungen, beispielsweise auf Basis von Co oder Mn (Überblick in U. Poth, Polyester und Alkydharze, Vincentz Network 2005, S 183 f).

Die vernetzende Komponente wird vorzugsweise in einer Menge von 0,0005 bis 4,99 Gew.-%, bevorzugt 0,001 bis 2,5 Gew.-%, insbesondere 0,01 bis 1,5 Gew.-%, bezogen auf das Gesamtgewicht der zur Polymerisation eingesetzten Monomere (einschließlich des Vernetzers), eingesetzt.

Eine spezielle Ausführungsform sind Polymerdispersionen (PD), die keinen Vernetzer einpolymerisiert enthalten.

Die radikalische Polymerisation der Monomere (M1) und (M2) kann in Gegenwart mindestens eines Reglers erfolgen. Regler werden vorzugsweise in einer Einsatzmenge von 0,0005 bis 5 Gew.-%, besonders bevorzugt von 0,001 bis 2,5 Gew.-% und insbesondere von 0,01 bis 1,5 Gew.-%, bezogen auf das Gesamtgewicht der zur Polymerisation eingesetzten Monomere, eingesetzt.

Als Regler (Polymerisationsregler) werden allgemein Verbindungen mit hohen Übertragungskonstanten bezeichnet. Regler beschleunigen Kettenübertragungsreaktionen und bewirken damit eine Herabsetzung des Polymerisationsgrades der resultierenden Polymeren, ohne die Bruttoreaktions-Geschwindigkeit zu beeinflussen. Bei den Reglern kann man zwischen mono-, bi- oder polyfunktionalen Reglern unterscheiden, je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können als Regler eingesetzt werden: Ameisensäure, ihre Salze oder Ester, wie Ammoniumformiat, 2,5-Diphenyl-1-hexen, Hydroxylammoniumsulfat, und Hydroxylammoniumphosphat.

Weitere geeignete Regler sind Halogenverbindungen, z. B. Alkylhalogenide wie Tetrachlormethan, Chloroform, Bromtrichlormethan, Bromoform, Allylbromid und Benzylverbindungen wie Benzylchlorid oder Benzylbromid.

Weitere geeignete Regler sind Allylverbindungen, wie z. B. Allylalkohol, funktionalisierte Allylether, wie Allylethoxylate, Alkylallylether oder Glycerinmonoallylether.

Bevorzugt werden als Regler Verbindungen eingesetzt, die Schwefel in gebundener Form enthalten.

Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid.

Geeignet als Polymerisationsregler sind weiterhin Thiole (Verbindungen, die Schwefel in Form von SH-Gruppen enthalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan.

Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bisthioglykolate und Butandiol-bis-thioglykolat. Beispiele für polyfunktionale Regler sind Verbindungen, die mehr als zwei Schwefelatome in gebundener Form enthalten. Beispiele hierfür sind trifunktionale und/oder tetrafunktionale Mercaptane.

Alle genannten Regler können einzeln oder in Kombination miteinander eingesetzt werden. Eine spezielle Ausführungsform betrifft die erfindungsgemäße Verwendung von Polymeren (P), die durch radikalische Emulsionspolymerisation ohne Zusatz eines Reglers hergestellt werden.

Zur Herstellung der Polymere (P) können die Monomere mit Hilfe von radikalbildenden Initiatoren polymerisiert werden.

Als Initiatoren für die radikalische Polymerisation können die hierfür üblichen Peroxo- und/oder Azoverbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, 2,2'-Azo-bis-(2-amidinopropan)dihydrochlorid oder 2-2'-Azo-bis-(2-methyl-butyronitril). Geeignet sind auch Gemische dieser Initiatoren.

Als Initiatoren können auch Reduktions-/Oxidations-(= Red-Ox)-Initiator Systeme eingesetzt werden. Die Red-Ox-Initiator-Systeme bestehen aus mindestens einem, meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponente handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxodisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die Menge der Initiatoren beträgt im Allgemeinen 0,1 bis 10 Gew.-%, bevorzugt 0,1 bis 5 Gew.-%, bezogen auf alle zu polymerisierenden Monomeren. Es können auch mehrere, verschiedene Initiatoren bei der Emulsionspolymerisation Verwendung finden.

Die Herstellung der erfindungsgemäß verwendeten Polymere (P), erfolgt üblicherweise in Gegenwart wenigstens einer grenzflächenaktiven Verbindung. Hierfür kommen neben den zuvor genannten Emulgatoren (E) insbesondere Schutzkolloide, wie sie beispielsweise in Houben-Weyl, Methoden der organischen Chemie, Band XIV/1, Makromolekulare Stoffe, Georg Thieme Verlag, Stuttgart, 1961, S. 411 bis 420, beschrieben werden und Emulgatoren, wie sie beispielsweise in Houben-Weyl, Methoden der organischen Chemie, Band 14/1, Makromolekulare Stoffe, Georg Thieme Verlag, Stuttgart, 1961, Seiten 192 bis 208, beschrieben werden, in Betracht.

Neben den erfindungsgemäß verwendeten Emulgatoren (E) sind als Emulgatoren sowohl anionische als auch kationische als auch nicht-ionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen.

Geeignete nichtionische Emulgatoren sind araliphatische oder aliphatische nicht-ionische Emulgatoren, beispielsweise ethoxylierte Mono-, Di- und Trialkylphenole (Ethoxylierungsgrad: 3 bis 50, Alkylrest: $C_4$-$C_{10}$), Ethoxylate langkettiger Alkohole (Ethoxylierungsrad: 3 bis 100, Alkylrest: $C_8$-$C_{36}$) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. Ethylenoxid/Propylenoxid-Blockcopolymere. Bevorzugt werden Ethoxylate langkettiger Alkanole (Alkylrest $C_1$-$C_{30}$, mittlerer Ethoxylierungsgrad 5 bis 100) und darunter besonders bevorzugt solche mit einem linearen $C_{12}$-$C_{20}$-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: $C_8$-$C_{22}$), von Schwefelsäurehalbestern ethoxylierter Alkanole (Ethoxylierungsgrad: 2 bis 50, Alkylrest: $C_{12}$-$C_{18}$) und ethoxylierter Alkylphenole (Ethoxylierungsgrad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$-$C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus US 4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-$C_6$-$C_{20}$-Alkylpyridinen, -morpholinen oder -imidazolen, z. B. N-Laurylpyridiniumchlorid.

Erfolgt die Herstellung der Polymere (P) in Gegenwart wenigstens einer grenzflächenaktiven Verbindung, wird diese im Allgemeinen in einer Menge von etwa 0,01 bis 10 Gew.-%, bevorzugt 0,1 bis 5 Gew.-%, bezogen auf die Menge an zu polymerisierenden Monomeren, eingesetzt.

Die Polymerisation erfolgt im Allgemeinen bei Temperaturen in einem Bereich von 0 bis 150 °C, bevorzugt 20 bis 100 °C, besonders bevorzugt 30 bis 95 °C. Die Polymerisation erfolgt vorzugsweise bei Normaldruck, möglich ist jedoch auch eine Polymerisation unter erhöhtem Druck, beispielsweise dem Eigendruck der zur Polymerisation eingesetzten Komponenten. In einer geeigneten Ausführung erfolgt die Polymerisation in Gegenwart wenigstens eines Inertgases, wie z. B. Stickstoff oder Argon.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes oder auch eine Polymersaat vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

In einer speziellen Ausführung erfolgt die Herstellung der erfindungsgemäßen und erfindungsgemäß eingesetzten Polymerdispersion (PD) unter Einsatz eines Saatpolymers. Unter dem Begriff Saatpolymer versteht der Fachmann ein feinteiliges Polymer in Form einer wässrigen Polymerdispersion. Die gewichtsmittlere Teilchengröße von Saatpolymeren (Gewichtsmittel, $d_{50}$-Wert) liegt typischerweise unterhalb von 200 nm, häufig im Bereich von 10 bis 150 nm. Die Monomerzusammensetzungen der Saatpolymere ist in der Regel von untergeordneter Bedeutung. Geeignet sind sowohl Saatpolymere, die überwiegend aus vinylaromatischen Monomeren und insbesondere aus Styrol aufgebaut sind (sogenannte Styrol-Saat), als auch Saatpolymere, die überwiegend aus $C_1$-$C_{10}$-Alkylacrylaten und/oder $C_1$-$C_{10}$-Al-

kylmethacrylaten, z. B. aus einer Mischung aus Butylacrylat und Methylmethacrylat aufgebaut sind. Neben diesen Hauptmonomeren, die typischerweise wenigstens 80 Gew.-% und insbesondere wenigstens 90 Gew.-% des Saatpolymeren ausmachen, können die Saatpolymere auch davon verschiedene Monomere, insbesondere solche mit einer erhöhten Wasserlöslichkeit, z. B. Monomere mit wenigstens einer Säurefunktion und/oder neutrale Monomere mit erhöhter Wasserlöslichkeit einpolymerisiert enthalten. Der Anteil derartiger Monomere wird in der Regel 20 Gew.-% und insbesondere 10 Gew.-% nicht überschreiten und liegt, sofern vorhanden, typischerweise im Bereich von 0,1 bis 10 Gew.-%, bezogen auf die Gesamtmenge der das Saatpolymer konstituierenden Monomere.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Die bei der Polymerisation entstandenen Dispersionen können im Anschluss an den Polymerisationsprozess einer physikalischen oder chemischen Nachbehandlung unterworfen werden. Solche Verfahren sind beispielsweise die bekannten Verfahren zur Restmonomerenreduzierung, wie z. B. die Nachbehandlung durch Zusatz von Polymerisationsinitiatoren oder Mischungen mehrerer Polymerisationsinitiatoren bei geeigneten Temperaturen, eine Nachbehandlung der Polymerlösung mittels Wasserdampf oder Ammoniakdampf, oder Strippen mit Inertgas oder Behandeln der Reaktionsmischung mit oxidierenden oder reduzierenden Reagenzien, Adsorptionsverfahren wie die Adsorption von Verunreinigung an ausgewählten Medien wie z. B. Aktivkohle oder eine Ultrafiltration.

Bevorzugt weisen die erfindungsgemäß verwendeten Polymere (P) ein gewichtsmittleres Molekulargewicht $M_w$ im Bereich von etwa 1 000 bis 2 000 000, bevorzugt 1 500 bis 1 000 000 und insbesondere 2 000 bis 500 000, auf. Die Molmassenbestimmung kann dabei durch Gelpermeationschromatographie mit einem Standard, wie Polymethylmethacrylat, erfolgen.

Die Glasübergangstemperatur $T_g$ der erfindungsgemäß verwendeten Polymere (P) ist vorzugsweise kleiner als 50 °C, besonders bevorzugt kleiner als 40 °C, insbesondere kleiner als 30 °C.

Erfindungsgemäß verwendete Polymerdispersionen (PD) enthalten neben dem zuvor beschriebenen Polymer (P) wenigstens einen Emulgator (E). Üblicherweise erfolgt die radikalische Emulsionspolymerisation in Gegenwart dieses Emulgators (E). Der Emulgator (E) kann jedoch auch erst nach erfolgter Emulsionspolymerisation zugesetzt werden.

Geeignete Emulgatoren (E) sind die Ester, d.h. die Mono- und Diester, der Phosphorsäure mit gegebenenfalls bis zu 20-fach alkoxylierten $C_8$-$C_{30}$-Alkanolen, speziell die Monoester. Häufig werden die Mono- und die Diester als Gemisch nebeneinander bereitgestellt werden. Daher ist in einer speziellen Ausführungsform der vorliegenden Erfindung der liegt der Emulgator (E) in den Polymerdispersionen (PD) als Gemisch der Mono- und die Diester enthalten.

Geeignete Emulgatoren (E) sind auch die Diester der Phosphorsäure, die einfach mit einem gegebenenfalls bis zu 20-fach alkoxylierten $C_8$-$C_{30}$-Alkanol und zusätzlich einfach mit einem davon verschiedenen $C_1$-$C_{30}$-Alkanol, bevorzugt mit einem $C_1$-$C_7$-Alkanol, verestert sind.

Bevorzugt sind die gegebenenfalls alkoxylierten $C_8$-$C_{30}$-Alkanol ethoxyliert und/oder propoxyliert, besonders bevorzugt ethoxyliert, d.h. -$(AO)_m$ steht in den Verbindungen der Formel (I) besonders bevorzugt für eine Polyethergruppe -$(CH_2CH_2\text{-}O)_m$-.

In einer bevorzugten Ausführungsform der vorliegenden Erfindung steht m in den Verbindungen der Formel (I) wenigstens für 1 und besonders bevorzugt wenigstens für 2. Der Wert m wird üblicherweise 20 und häufig 15 nicht übersteigen. Bevorzugt als Emulgatoren (E) sind Verbindungen der allgemeinen Formel $C_sH_{2s+1}O(CH_2CH_2O)_t$-$P(=O)(OH)_2$, worin s für 6 bis 30 steht und t für 0 bis 20 steht. Bevorzugt als Emulgatoren (E) sind z.B.

Maphos 24 T ($C_{10}H_{21}O(CH_2CH_2O)_4$-$P(=O)(OH)_2$) und
Maphos 10 T ((2-Ethylhexyl)phosphat), beide von BASF BTC.

Die erfindungsgemäßen Polymerdispersionen (PD) enthaltend im Allgemeinen bis zu 20 Gew.-%, bevorzugt bis zu 10 Gew.-%, besonders bevorzugt bis zu 5 Gew.-% wenigstens eines Emulgators (E), bezogen auf das Gesamtgewicht der zur Emulsionspolymerisation eingesetzten Monomere. Die erfindungsgemäßen Polymerdispersionen (PD) enthaltend im Allgemeinen wenigstens 0,05 Gew.-%, bevorzugt wenigstens 0,1 Gew.-% wenigstens eines Emulgators (E), bezogen auf das Gesamtgewicht der zur Emulsionspolymerisation eingesetzten Monomere.

Den Polymerdispersionen (PD) können weiterhin übliche Hilfs- und Zusatzstoffe zugesetzt werden. Dazu zählen beispielsweise den pH-Wert einstellende Substanzen, Reduktions- und Bleichmittel, wie z. B. die Alkalimetallsalze der Hydroxymethansulfinsäure (z. B. Rongalit® C der BASF Aktiengesellschaft), Komplexbildner, Desodoranten, Geschmacksstoffe, Geruchsstoffe und Viskositätsmodifizierer, wie Alkohole, z. B. Glycerin, Methanol, Ethanol, tert.-Butanol, Glykol etc. Diese Hilfs- und Zusatzstoffe können den Polymerdispersionen in der Vorlage, einem der Zuläufe oder nach Abschluss der Polymerisation zugesetzt werden.

Die wässrige Polymerdispersion (PD) weist üblicherweise einen Feststoffgehalt von 20 bis 70 Gew.-%, vorzugsweise 40 bis 65 Gew.-%. Der Feststoffgehalt beträgt in einer speziellen Ausführung mindestens 50 Gew.-%, spezieller mindestens 55 Gew.-%, noch spezieller mindestens 58 Gew.-%. Möglich sind Feststoffgehalte von mindestens 60 Gew.-% oder auch mindestens 65 Gew.-%.

In besonderem Maße geeignet für die erfindungsgemäße Verwendung sind Polymerdispersionen (PD), gemäß Anspruch 12, enthaltend:

i) wenigstens ein Polymer (P) erhältlich durch radikalische Emulsionspolymerisation einer Monomerzusammensetzung enthaltend:

- 95 bis 99,99 Gew.-%, bezogen auf das Gesamtgewicht der zur Emulsions-polymerisation eingesetzten Monomere, eines ethylenisch ungesättigten Monomers (M1), und
- 0,01 bis 5 Gew.-%, bezogen auf das Gesamtgewicht der zur Emulsionspolymerisation eingesetzten Monomere, wenigstens eines davon verschiedenen Monomers (M2), das ausgewählt ist unter Estern der Phosphonsäure oder der Phosphorsäure mit gegebenenfalls alkoxylierten Hydroxyalkyl(meth)acrylaten; und

ii) wenigstens einen Emulgator (E), ausgewählt unter Verbindungen der Formel (I) und den Salzen der Verbindungen der Formel (I),

$$R^1\text{-}O\text{-}(AO)_m\text{-}P(=O)(OR^2)(OH) \qquad (I)$$

worin

m     für eine ganze Zahl von 0 bis 20 steht,
AO     für Alkylenoxy steht,
$R^1$     für $C_8$-$C_{30}$-Alkyl steht und
$R^2$     für H oder eine Gruppe -$(AO)_m R^{2a}$ steht, worin $R^{2a}$ die für $R^1$ gegebene Bedeutung aufweist und AO und m eine der zuvor gegebenen Bedeutungen aufweisen.

Diese besonders geeigneten und erfindungsgemäß verwendeten Polymerdispersionen (PD) sind neu und sind geeignet durch ihre Verwendung in Anstrichmitteln die Scheuerbeständigkeit der daraus hergestellten Anstriche und/oder die Polierbeständigkeit der daraus hergestellten Anstriche und/oder die Fleckbeständigkeit der daraus hergestellten Anstriche und/oder die Pigmentverteilung in den daraus hergestellten Anstrichen und/oder die Emission von flüchtigen organischen Verbindungen durch die daraus hergestellten Anstriche zu verbessern. Demzufolge sind diese besonders geeigneten und erfindungsgemäß verwendeten Polymerdispersionen ebenso wie deren Verwendung Gegenstand der vorliegenden Erfindung.

Bezüglich bevorzugter Ausführungsformen der erfindungsgemäßen Polymerdispersionen (PD) wird in vollem Umfang auf die zuvor im Rahmen der erfindungsgemäßen Verwendung gemachten Ausführungen Bezug genommen. Die zur Bereitstellung der Polymere (P) durch radikalische Emulsionspolymerisation verwendeten Monomerzusammensetzung können erfindungsgemäß neben den Monomeren (M1) und (M2) bis zu 4,99 Gew.-% weiterer Monomere, bezogen auf das Gesamtgewicht der zur Emulsionspolymerisation eingesetzten Monomere, umfassen. Als weitere Monomere kommen insbesondere die zuvor im Rahmen der Verwendung als weitere geeignete Monomere (M1) sowie die zuvor als Vernetzer genannten Monomere in Betracht. Üblicherweise wird jedoch der Anteil der zur radikalische Emulsionspolymerisation verwendeten Monomerzusammensetzung 3 Gew.-%, bevorzugt 1 Gew.-% und besonders bevorzugt 0,1 Gew.-% an weiteren Monomeren nicht überschreiten. In einer speziellen Ausführungsform der vorliegenden Erfindung addieren sich die Anteile an Monomeren (M1) und (M2) in den zur radikalischen Emulsionspolymerisation verwendeten Monomerzusammensetzung zu 100 Gew.-%, bezogen auf das Gesamtgewicht der zur Emulsionspolymerisation eingesetzten Monomere, d.h. die Polymere (P) enthalten neben den Monomeren (M1) und (M2) keine weiteren Monomere in einpolymerisierter Form.

Ebenso bevorzugt ist das in den erfindungsgemäßen Polymerdispersion (PD) enthaltene Polymer (P) durch eine Emulsionspolymerisation erhältlich ist, bei der wenigstens ein Teil der Monomer (M2) ausgewählt ist unter Estern der Phosphorsäure mit gegebenenfalls alkoxylierten Hydroxyalkyl(meth)acrylaten, insbesondere Monoestern der Phosphorsäure mit gegebenenfalls alkoxylierten Hydroxyalkyl(meth)acrylaten, und Mischungen davon. Bezüglich weiterer bevorzugten Bedeutungen und Mengen der Monomere (M2) in den erfindungsgemäßen Polymerdispersionen (PD) wird in vollem Umfang auf die zuvor gemachten Ausführungen verwiesen.

Die erfindungsgemäßen Polymerdispersion (PD) enthaltend bis zu 20 Gew.-%, bevorzugt bis zu 10 Gew.-%, besonders bevorzugt bis zu 5 Gew.-% wenigstens eines Emulgators (E), bezogen auf das Gesamtgewicht der zur Emulsionspolymerisation eingesetzten Monomere. Bezüglich der bevorzugten Bedeutungen des Emulgators (E) in den erfindungsgemäßen Polymerdispersionen (PD) wird in vollem Umfang auf die zuvor gemachten Ausführungen verwiesen.

Die zuvor beschriebenen erfindungsgemäßen Polymerdispersionen (PD) können als solche oder gemischt mit weiteren, in der Regel filmbildenden Polymeren als Bindemittelzusammensetzung in wässrigen Anstrichmitteln, wie Farb-oder Lackmischungen, verwendet werden.

Die erfindungsgemäßen Polymerdispersionen (PD) kommen vorzugsweise in wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten ($V_P$) und Füllstoffen ($V_F$) zum Gesamtvolumen, bestehend aus den Volumina an Bindemittel ($V_B$), Pigmenten und Füllstoffen eines getrockneten Beschichtungsfilms in Prozent: PVK = ($V_P$ + $V_F$) x 100 / ($V_P$ + $V_F$ + $V_B$). Anstrichmittel lassen sich anhand der PVK beispielsweise wie folgt einteilen:

| | |
|---|---|
| hochgefüllte Innenfarbe, waschbeständig, weiß/matt | ca. 85 |
| Innenfarbe, scheuerbeständig, weiß/matt | ca. 80 |
| Halbglanzfarbe, seidenmatt | ca. 35 |
| Halbglanzfarbe, seidenglänzend | ca. 25 |
| Hochglanzfarbe | ca. 15-25 |
| Außenfassadenfarbe, weiß | ca. 45-55 |
| Klarlack | 0 |

Eine Ausführungsform der vorliegenden Erfindung betrifft Anstrichmittel in Form eines Klarlacks. Eine weitere Ausführungsform der vorliegenden Erfindung sind Anstrichmittel in Form einer Dispersionsfarbe. Die erfindungsgemäßen pigmentierten Anstrichmittel liegen vorzugsweise in Form einer wässrigen Seidenglanz- oder einer Hochglanzfarbe vor.

Ein Gegenstand der Erfindung betrifft ein Anstrichmittel in Form einer wässrigen Zusammensetzung, enthaltend:

- wenigstens eine Polymerdispersion (PD), wie zuvor definiert,
- wenigstens einen anorganischen Füllstoff und/oder wenigstens ein anorganisches Pigment,
- wenigstens ein übliches Hilfsmittel, und
- Wasser.

Bevorzugt ist ein Anstrichmittel, enthaltend:

- 10 bis 60 Gew.-% wenigstens einer Polymerdispersion (PD), wie zuvor definiert,
- 10 bis 70 Gew.-% anorganische Füllstoffe und/oder anorganische Pigmente,
- 0,1 bis 20 Gew.-% übliche Hilfsmittel, und
- Wasser ad 100 Gew.-%.

Im Folgenden wird die Zusammensetzung einer üblichen Dispersionsfarbe erläutert. Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber das Gesamtgewicht an Bindemittel, Füllstoff, Pigment, schwerflüchtigen Lösungsmitteln (Siedepunkt oberhalb 220 °C), z. B. Weichmacher, und polymere Hilfsmittel. Davon entfallen etwa

a) 3 bis 90 Gew.-%, insbesondere 10 bis 60 Gew.-%, auf die erfindungsgemäße Polymerdispersion (PD),
b) 0 bis 85 Gew.-%, bevorzugt 5 bis 60 Gew.-%, insbesondere 10 bis 50 Gew.-%, auf wenigstens ein anorganisches Pigment,
c) 0 bis 85 Gew.-%, insbesondere 5 bis 60 Gew.-%, auf anorganische Füllstoffe und
d) 0,1 bis 40 Gew.-%, insbesondere 0,5 bis 20 Gew.-%, auf übliche Hilfsmittel.

Insbesondere eignen sich die erfindungsgemäßen Polymerdispersionen (PD) zur Herstellung von Fassadenfarben mit einer PVK im Bereich von 30 bis 65 oder Innenfarben mit einer PVK im Bereich von 65 bis 80. Unter der Pigmentvolumenkonzentration PVK versteht man hier den mit 100 multiplizierten Quotienten aus dem Gesamtvolumen von Pigmenten plus Füllstoffen geteilt durch das Gesamtvolumen aus Pigmenten, Füllstoffen und Bindemittelpolymeren; vgl. Ullmanns Enzyklopädie der technischen Chemie, 4. Auflage, Band 15, S. 667.

Als Pigment werden im Rahmen dieser Erfindung zusammenfassend alle Pigmente und Füllstoffe, z. B. Farbpigmente, Weißpigmente und anorganische Füllstoffe bezeichnet. Dazu zählen anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Der Anteil der Pigmente kann, wie zuvor beschrieben, durch die Pigmentvolumenkonzentration (PVK), beschrieben werden. Erfindungsgemäße Anstrichmittel in Form von Hochglanzlacken haben z. B. eine PVK im Bereich von 12 bis 35 %, vorzugsweise 15 bis 30 %.

Das erfindungsgemäße Beschichtungsmittel (wässrige Anstrichmittel) kann neben der Polymerdispersion (PD), gegebenenfalls zusätzlichen filmbildenden Polymeren und Pigment weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-% Verdicker, bezogen auf Feststoffgehalt des Anstrichmittels.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment und Hilfsmittel, bezogen auf den Feststoffgehalt des Anstrichmittels. Bei den flüchtigen Bestandteilen handelt es sich vorwiegend um Wasser.

Das erfindungsgemäße Anstrichmittel kann in üblicher Weise auf Substrate aufgebracht werden, z. B. durch Streichen, Spritzen, Tauchen, Rollen, Rakeln etc.

Es wird vorzugsweise als Bautenanstrichmittel, d. h. zum Beschichten von Gebäuden oder Gebäudeteilen verwendet. Es kann sich dabei um mineralische Untergründe wie Putze, Gips- oder Gipskartonplatten, Mauerwerk oder Beton, um Holz, Holzwerkstoffe, Metall oder Papier, z. B. Tapeten oder Kunststoff, z. B. PVC, handeln.

Vorzugsweise findet das Anstrichmittel für Gebäudeinnenteile, z. B. Innenwände, Innentüren, Vertäfelungen, Treppengeländer, Möbel etc. Verwendung.

Die erfindungsgemäßen Anstrichmittel zeichnen sich durch einfache Handhabung, gute Verarbeitungseigenschaften und hohes Deckvermögen aus. Die Anstrichmittel sind schadstoffarm. Sie haben gute anwendungstechnische Eigenschaften, z. B. eine gute Wasserfestigkeit, gute Nasshaftung, gute Blockfestigkeit, eine gute Überstreichbarkeit und sie zeigen beim Auftragen einen guten Verlauf. Das verwendete Arbeitsgerät lässt sich leicht mit Wasser reinigen.

Die aus den erfindungsgemäßen Anstrichmitteln hergestellten Anstriche zeichnen sich durch gute Fleckbeständigkeit bei gleichzeitiger guter Scheuer- und Polierbeständigkeit aus. Zudem weisen die aus den erfindungsgemäßen Anstrichmitteln hergestellten Anstriche im Allgemeinen einen geringen Anteil flüchtiger organischer Verbindungen auf.

Die Erfindung wird anhand der folgenden nicht einschränkend auszulegenden Beispiele näher erläutert.

Beispiele:

I. Herstellung der Polymerdispersionen 1 bis 7 (PD 1 bis PD 7)

Beispiel 1: Herstellung der Polymerdispersion 1

In einem mit Dosiervorrichtung und Temperaturregelung ausgerüsteten Polymerisationsgefäß wurden vorgelegt:

| | Vorlage: |
|---|---|
| 201,24 g | vollentsalztes Wasser |
| 0,13 g | Kupfer(II)sulfat (0,1 %ige wässrige Lösung) |
| 3,25 g | Maranil A 20 (20%ige wässrige Lösung, Natrium (n-($C_{10}$-$C_{13}$)-Alkyl-phenyl)sulfonat) |

Danach wurde unter Rühren (150 Upm) auf 95 °C erhitzt. Anschließend wurden unter Aufrechterhaltung dieser Temperatur 36,33 g von Zulauf 1 und nach weiteren10 Minuten unter Rühren 10,92 g von Zulauf 2 zugegeben und weitere 5 Minuten gerührt. Danach wurden die Restmengen von Zulauf 1 und Zulauf 2 parallel über 2,5 Stunden zugegeben.

Zulauf 1:

| | |
|---|---|
| 371,88 g | vollentsalztes Wasser |
| 6,50 g | Maphos 24 T ($C_{10}H_{21}O(CH_2CH_2O)_4$-$P(=O)(OH)_2$, BASF BTC) |
| 2,60 g | Sipomer PAM 100 ($CH_2$=$C(CH_3)C(=O)O(CH_2CH_2O)_7$-$P(=O)(OH)_2$, Rhodia) |
| 5,78 g | Dowfax 2A1 (45%ige wässrige Lösung, Alkyldiphenyloxiddisulfonat) |
| 8,45 g | Acrylsäure |
| 19,50 g | Acrylamid (50%ige wässrige Lösung) |
| 362,70 g | n-Butylacrylat |
| 266,50 g | Methylmethacrylat |

Zulauf 2:

| | |
|---|---|
| 31.20 g | Natriumperoxodisulfat (2,5%ige wässrige Lösung) |

Nach Beendigung der Zugabe wurde Zulauf 1 mit 7,22 g Wasser nachgespült das Polymerisationsgemisch wurde weitere 15 Minuten bei 90 °C gerührt. Anschließend wurden nacheinander 2.60 g Ammoniak (25%ige wässrige Lösung) mit 3,90 g vollentsalztes Wasser über 15 Minuten, 3,90 g tert.-Butylhydroperoxid (10%ige wässrige Lösung) mit 5,92 g vollentsalztem Wasser über 1 Stunde und 4,96 g Acetonbisulfit (13,1 %ige wässrige Lösung) mit 9,30 g vollentsalztem Wasser über eine Stunde zugegeben. Das Polymerisationsgemisch wurde weitere 15 Minuten gerührt und über 90 Minuten auf 30 °C abgekühlt. Anschließend wurden nacheinander 37,90 g vollentsalztes Wasser, 4,35 g Acticid MBS (5%ige wässrige Lösung) und 11,05 g Natronlauge (10%ige wässrige Lösung) in 11,57 g vollentsalztem Wasser zugegeben und das Polymerisationsgemisch auf Raumtemperatur abgekühlt.

Beispiel 2: Herstellung der Polymerdispersion 2

In einem mit Dosiervorrichtung und Temperaturregelung ausgerüsteten Polymerisationsgefäß wurden vorgelegt:

| | Vorlage: |
|---|---|
| 216,72 g | vollentsalztes Wasser |
| 0,14 g | Kupfer(II)sulfat (0,1 %ige wässrige Lösung) |
| 3,50 g | Maranil A 20 (20%ige wässrige Lösung, Natrium (n-($C_{10}$-$C_{13}$)-Alkyl-phenyl)sulfonat) |

Danach wurde unter Rühren (200 Upm) auf 95 °C erhitzt. Anschließend wurden unter Aufrechterhaltung dieser Temperatur 39,02 g von Zulauf 1 und nach weiteren 10 Minuten unter Rühren 11,76 g von Zulauf 2 zugegeben und weitere 5 Minuten gerührt. Danach wurden die Restmengen von Zulauf 1 und Zulauf 2 parallel über 2,5 Stunden zugegeben.

Zulauf 1:

| | |
|---|---|
| 398,97 g | vollentsalztes Wasser |
| 5,60 g | Maphos 10 T ((2-ethylhexyl)phosphat, BASF BTC) |
| 4,20 g | Sipomer PAM 300 ($CH_2$=CH-C(=O)O($CH_2CH_2O)_{7-10}$-P(=O)(OH)$_2$, Rhodia) |
| 6,22 g | Dowfax 2A1 (45%ige wässrige Lösung Alkyldiphenyloxiddisulfonat) |
| 9,10 g | Acrylsäure |
| 21,00 g | Acrylamid (50%ige wässrige Lösung) |
| 389,90 g | n-Butylacrylat |
| 286,30 g | Methylmethacrylat |

Zulauf 2:

| | |
|---|---|
| 33.60 g | Natriumperoxodisulfat (2,5%ige wässrige Lösung) |

Nach Beendigung der Zugabe wurde Zulauf 1 mit 7,77 g vollentsalztem Wasser nach-gespült. Das Polymerisationsgemisch wurde weitere 15 Minuten bei 90 °C gerührt. Anschließend wurden nacheinander 2.80 g Ammoniak (25%ige wässrige Lösung) mit 4,20 g vollentsalztem Wasser über 15 Minuten, 4,20 g tert.-Butylhydroperoxid (10%ige wässrige Lösung) mit 6,37 g vollentsalztem Wasser über 1 Stunde und 5,34 g Acetonbisulfit (13,1 %ige wässrige Lösung) mit 10,01 g vollentsalztem Wasser über eine Stunde zugegeben. Das Polymerisationsgemisch wurde weitere 15 Minuten gerührt und über 90 Minuten auf 30 °C abgekühlt. Anschließend wurden nacheinander 40,81 g vollentsalztes Wasser, 4,68 g Acticid MBS (5%ige wässrige Lösung) und 11,90 g Natonlauge (10%ige wässrige Lösung) mit 12,46 g vollentsalztem Wasser zugegeben und das Polymerisationsgemisch auf Raumtemperatur abgekühlt.

Beispiel 3: Herstellung der Polymerdispersion 3 (nicht erfindungsgemäß)

In einem mit Dosiervorrichtung und Temperaturregelung ausgerüsteten Polymerisationsgefäß wurden vorgelegt:

<div align="center">Vorlage:</div>

| | |
|---|---|
| 216,72 g | vollentsalztes Wasser |
| 0,14 g | Kupfer(II)sulfat (0,1 %ige wässrige Lösung) |
| 3,50 g | Maranil A 20 (20%ige wässrige Lösung Natrium (n-($C_{10}$-$C_{13}$)-Alkyl-phenyl)sulfonat) |

Danach wurde unter Rühren (150 Upm) auf 95 °C erhitzt. Anschließend wurden unter Aufrechterhaltung dieser Temperatur 35,32 g von Zulauf 1 und nach weiteren 10 Minuten unter Rühren 11,76 g von Zulauf 2 zugegeben und weitere 5 Minuten gerührt. Danach wurden die Restmengen von Zulauf 1 und Zulauf 2 parallel über 2,5 Stunden zugegeben.

Zulauf 1:

| | |
|---|---|
| 267,17 g | vollentsalztes Wasser |
| 9,33 g | Dowfax 2A1 (45%ige wässrige Lösung Alkyldiphenyloxiddisulfonat) |
| 28,00 g | Lutensol TO 89 (20%ige wässrige Lösung ethoxylierter $C_{13}$-Oxoalkohol, BASF) |
| 9,10 g | Acrylsäure |
| 21,00 g | Acrylamid (50%ige wässrige Lösung) |
| 392,00 g | n-Butylacrylat |
| 288,40 g | Methylmethacrylat |

Zulauf 2:

| | |
|---|---|
| 33,60 g | Natriumperoxodisulfat (2,5%ige wässrige Lösung) |

Nach Beendigung der Zugabe wurde Zulauf 1 mit 7,77 g vollentsalztem Wasser nach- gespült. das Polymerisationsgemisch wurde weitere 15 Minuten bei 90 °C gerührt. Anschließend wurden nacheinander 2.80 g Ammoniak (25%ige wässrige Lösung) mit 4,20 g vollentsalztem Wasser über 15 Minuten, 4,20 g tert.-Butylhydroperoxid (10%ige wässrige Lösung) mit 6,37 g vollentsalztem Wasser über 1 Stunde und 5,34 g Acetonbisulfit (13,1%ige wässrige Lösung) mit 10,01 g vollentsalztem Wasser über eine Stunde zugegeben. Das Polymerisationsgemisch wurde weitere 15 Minuten gerührt und über 90 Minuten auf 30 °C abgekühlt. Anschließend wurden nacheinander 40,81 g vollentsalztes Wasser, 4,68 g Acticid MBS (5%ige wässrige Lösung) und 11,90 g Natronlauge (10%ige wässrige Lösung) mit 12,46 g vollentsalztem Wasser zugegeben und das Polymerisationsgemisch auf Raumtemperatur abgekühlt.

Beispiel 4: Herstellung der Polymerdispersion 4 (nicht erfindungsgemäß)

In einem mit Dosiervorrichtung und Temperaturregelung ausgerüsteten Polymerisationsgefäß wurden vorgelegt:

Vorlage:

| | |
|---|---|
| 185,76 g | vollentsalztes Wasser |
| 0,12 g | Kupfer(II)sulfat (0,1 %ige wässrige Lösung) |
| 3,00 g | Maranil A 20 (20%ige wässrige Lösung Natrium (n-($C_{10}$-$C_{13}$)-Alkyl-phenyl)sulfonat) |

Danach wurde unter Rühren (150 Upm) auf 95 °C erhitzt. Anschließend wurden unter Aufrechterhaltung dieser Temperatur 29,95 g von Zulauf 1 und nach weiteren 10 Minuten unter Rühren 10,08 g von Zulauf 2 zugegeben und weitere 5 Minuten gerührt. Danach wurden die Restmengen von Zulauf 1 und Zulauf 2 parallel über 2,5 Stunden zugegeben.

Zulauf 1:

| | |
|---|---|
| 243,74 g | vollentsalztes Wasser |
| 4,80 g | Sipomer PAM 100 ($CH_2$=C($CH_3$)C(=O)O($CH_2CH_2O$)$_7$-P(=O)(OH)$_2$, Rhodia) |
| 8,00 g | Dowfax 2A1 (45%ige wässrige Lösung Alkyldiphenyloxiddisulfonat) |
| 7,80 g | Acrylsäure |
| 18,00 g | Acrylamid (50%ige wässrige Lösung) |
| 333,6 g | n-Butylacrylat |
| 244,80 g | Methylmethacrylat |

Zulauf 2:

| | |
|---|---|
| 28.80 g | Natriumperoxodisulfat (2,5%ige wässrige Lösung) |

Nach Beendigung der Zugabe wurde Zulauf 1 mit 6,66 g vollentsalztem Wasser nach-gespült. Das Polymerisationsgemisch wurde weitere 15 Minuten bei 90 °C gerührt. Anschließend wurden nacheinander 2,40 g Ammoniak (25%ige wässrige Lösung) mit 3,60 g Wasser über 15 Minuten, 3,60 g tert.-Butylhydroperoxid (10%ige wässrige Lösung) mit 5,46 g vollentsalztem Wasser über 1 Stunde und 4,58 g Acetonbisulfit (13,1 %ige wässrige Lösung) mit 8,58 g vollentsalztem Wasser über eine Stunde zugegeben. Das Polymerisationsgemisch wurde weitere 15 Minuten gerührt und über 90 Minuten auf 30 °C abgekühlt. Anschließend wurden nacheinander 34,98 g vollentsalztes Wasser, 4,01 g Acticid MBS (5%ige wässrige Lösung) und 10,20 g Natronlauge (10%ige wässrige Lösung) mit 10,68 g vollentsalztem Wasser zugegeben und das Polymerisationsgemisch auf Raumtemperatur abgekühlt.

Beispiel 5: Herstellung der Polymerdispersion 5 (nicht erfindungsgemäß)

In einem mit Dosiervorrichtung und Temperaturregelung ausgerüsteten Polymerisationsgefäß wurden vorgelegt:

Vorlage:

| | |
|---|---|
| 185,76 g | vollentsalztes Wasser |
| 0,12 g | Kupfer(II)sulfat (0,1 %ige wässrige Lösung) |
| 3,00 g | Maranil A 20 (20%ige wässrige Lösung Natrium (n-($C_{10}$-$C_{13}$)-Alkyl-phenyl)sulfonat) |

Danach wurde unter Rühren (150 Upm) auf 95 °C erhitzt. Anschließend wurden unter Aufrechterhaltung dieser Temperatur 29,95 g von Zulauf 1 und nach weiteren10 Minuten unter Rühren 10,08 g von Zulauf 2 zugegeben und weitere 5 Minuten gerührt. Danach wurden die Restmengen von Zulauf 1 und Zulauf 2 parallel über 2,5 Stunden zugegeben.

Zulauf 1:

| | |
|---|---|
| 243,74 g | vollentsalztes Wasser |
| 4,80 g | Sipomer PAM 300 ($CH_2$=CH-C(=O)O($CH_2CH_2O$)$_{7-10}$-P(=O)(OH)$_2$, Rhodia) |
| 8,00 g | Dowfax 2A1 (45%ige wässrige Lösung Alkyldiphenyloxiddisulfonat) |
| 7,80 g | Acrylsäure |
| 18,00 g | Acrylamid (50%ige wässrige Lösung) |
| 333,60 g | n-Butylacrylat |
| 244,80 g | Methylmethacrylat |

Zulauf 2:

| | |
|---|---|
| 28,80 g | Natriumperoxodisulfat (2,5%ige wässrige Lösung) |

Nach Beendigung der Zugabe wurde Zulauf 1 mit 6,66 g vollentsalztem Wasser nach-gespült. das Polymerisationsgemisch wurde weitere 15 Minuten bei 90 °C gerührt. Anschließend wurden nacheinander 2.40 g Ammoniak (25%ige wässrige Lösung) mit 3,60 g vollentsalztem Wasser über 15 Minuten, 3,60 g tert.-Butylhydroperoxid (10%ige wässrige Lösung) mit 5,46 g vollentsalztem Wasser über 1 Stunde und 4,58 g Acetonbisulfit (13,1 %ige wässrige Lösung) mit 8,58 g vollentsalztem Wasser über eine Stunde zugegeben. Das Polymerisationsgemisch wurde weitere 15 Minuten gerührt und über 90 Minuten auf 30 °C abgekühlt. Anschließend wurden nacheinander 34,98 g vollentsalztes Wasser, 4,01 g Acticid MBS (5%ige wässrige Lösung) und 10,20 g Natronlauge (10%ige wässrige Lösung) mit 10,68 g vollentsalztem Wasser zugegeben und das Polymerisationsgemisch auf Raumtemperatur abgekühlt.

Beispiel 6: Herstellung der Polymerdispersion 6 (nicht erfindungsgemäß)

In einem mit Dosiervorrichtung und Temperaturregelung ausgerüsteten Polymerisationsgefäß wurden vorgelegt:

Vorlage:

| | |
|---|---|
| 216,72 g | vollentsalztes Wasser |
| 0,14 g | Kupfer(II)sulfat (0,1%ige wässrige Lösung) |
| 3,50 g | Maranil A 20 (20%ige wässrige Lösung Natrium (n-($C_{10}$-$C_{13}$)-Alkyl-phenyl)sulfonat) |

Danach wurde unter Rühren (150 Upm) auf 95 °C erhitzt. Anschließend wurden unter Aufrechterhaltung dieser Temperatur 35,32 g von Zulauf 1 und nach weiteren 10 Minuten unter Rühren 11,76 g von Zulauf 2 zugegeben und weitere 5 Minuten gerührt. Danach wurden die Restmengen von Zulauf 1 und Zulauf 2 parallel über 2,5 Stunden zugegeben.

Zulauf 1:

| | |
|---|---|
| 289,57 g | vollentsalztes Wasser |
| 5,60 g | Maphos 10 T ((2-ethylhexyl)phosphat, BASF BTC) |
| 9,33 g | Dowfax 2A1 (45%ige wässrige Lösung Alkyldiphenyloxiddisulfonat) |
| 9,10 g | Acrylsäure |
| 21,00 g | Acrylamid (50%ige wässrige Lösung) |
| 392,00 g | n-Butylacrylat |
| 288,40 g | Methylmethacrylat |

Zulauf 2:

33,60 g      Natriumperoxodisulfat (2,5%ige wässrige Lösung)

Nach Beendigung der Zugabe wurde Zulauf 1 mit 7,77 g vollentsalztem Wasser nach-gespült. das Polymerisationsgemisch wurde weitere 15 Minuten bei 90 °C gerührt. Anschließend wurden nacheinander 2,80 g Ammoniak (25%ige wässrige Lösung) mit 4,20 g vollentsalztem Wasser über 15 Minuten, 4,20 g tert.-Butylhydroperoxid (10%ige wässrige Lösung) mit 6,37 g vollentsalztem Wasser über 1 Stunde und 5,34 g Acetonbisulfit (13,1 %ige wässrige Lösung) mit 10,01 g vollentsalztem Wasser über eine Stunde zugegeben. Das Polymerisationsgemisch wurde weitere 15 Minuten gerührt und über 90 Minuten auf 30 °C abgekühlt. Anschließend wurden nacheinander 40,81 g vollentsalztes Wasser, 4,68 g Acticid MBS (5%ige wässrige Lösung)und 11,90 g Natronlauge (10%ige wässrige Lösung) mit 12,46 g vollentsalztem Wasser zugegeben und das Polymerisationsgemisch auf Raumtemperatur abgekühlt.

Beispiel 7: Herstellung der Polymerdispersion 7 (nicht erfindungsgemäß)

In einem mit Dosiervorrichtung und Temperaturregelung ausgerüsteten Polymerisationsgefäß wurden vorgelegt:

Vorlage:

| | |
|---|---|
| 216,72 g | vollentsalztes Wasser |
| 0,14 g | Kupfer(II)sulfat (0,1%ige wässrige Lösung) |
| 3,50 g | Maranil A 20 (20%ige wässrige Lösung Natrium (n-($C_{10}$-$C_{13}$)-Alkyl-phenyl)sulfonat) |

Danach wurde unter Rühren (150 Upm) auf 95 °C erhitzt. Anschließend wurden unter Aufrechterhaltung dieser Temperatur 35,32 g von Zulauf 1 und nach weiteren10 Minuten unter Rühren 11,76 g von Zulauf 2 zugegeben und weitere 5 Minuten gerührt. Danach wurden die Restmengen von Zulauf 1 und Zulauf 2 parallel über 2,5 Stunden zugegeben.

Zulauf 1:

| | |
|---|---|
| 289,57 g | vollentsalztes Wasser |
| 5,60 g | Maphos 43 T (Monophosphat von ethoxylierten $C_{13}$-$C_{15}$-Oxoalkohol mit 3 EO, BASF BTC) |
| 9,33 g | Dowfax 2A1 (45%ige wässrige Lösung Alkyldiphenyloxiddisulfonat) |
| 9,10 g | Acrylsäure |
| 21,00 g | Acrylamid (50%ige wässrige Lösung) |
| 392,00 g | n-Butylacrylat |
| 288,40 g | Methylmethacrylat |

Zulauf 2:

33,60 g      Natriumperoxodisulfat (2,5%ige wässrige Lösung)

Nach Beendigung der Zugabe wurde Zulauf 1 mit 7,77 g vollentsalztem Wasser nach-gespült. das Polymerisationsgemisch wurde weitere 15 Minuten bei 90 °C gerührt. Anschließend wurden nacheinander 2,80 g Ammoniak (25%ige wässrige Lösung) mit 4,20 g vollentsalztem Wasser über 15 Minuten, 4,20 g tert.-Butylhydroperoxid (10%ige wässrige Lösung) mit 6,37 g vollentsalztem Wasser über 1 Stunde und 5,34 g Acetonbisulfit (13,1 %ige wässrige Lösung) mit 10,01 g vollentsalztem Wasser über eine Stunde zugegeben. Das Polymerisationsgemisch wurde weitere 15 Minuten gerührt und über 90 Minuten auf 30 °C abgekühlt. Anschließend wurden nacheinander 30,81 g vollentsalztes Wasser, 4,68 g Acticid MBS (5%ige wässrige Lösung) und 11,90 g Natronlauge (10%ige wässrige Lösung) mit 12,46 g vollentsalztem Wasser zugegeben und das Polymerisationsgemisch auf Raumtemperatur abgekühlt.

II. Herstellung der Anstrichmittel 1 bis 7 (AM 1 bis AM 7)

Die einzelnen Komponenten wurden in der Menge (Gewichtsteile) und Reihenfolge, wie in Tabelle A angegeben, unter Rühren mit einem Zahnscheibenrührer zudosiert. Nach Zugabe des Entschäumer 1 wurde das Gemisch 10 Minuten bei geringer Drehzahl homogenisiert. Anschließend wurde mit der Zugabe der Komponenten fortgefahren. Nach Zugabe des Mattierungsmittels wurde die Drehzahl auf 2000 U/min erhöht und 20 Minuten dispergiert, bis die Pigmentteilchen einen Durchmesser < 50 µm aufwiesen. Der Entschäumer 2 wurde zugegeben und das Gemisch wurde weitere 5 Minuten bei reduzierter Drehzahl homogenisiert. Dann gab man unter Rühren die restlichen Komponenten zu und ließ falls erforderlich auf Raumtemperatur abkühlen.

Tabelle A: Formulierung der Anstrichmittel

| Komponente | Name (Hersteller) | Menge [Gewichtsteile] |
|---|---|---|
| Wasser | - | 100 |
| Dispergiermittel | Pigment Disperser® MD 20 (BASF) | 12 |
| Dispergiermittel | tri-Kalium Polyphosphat (25%ige Lösung)(Sinoreagent) | 8 |
| Konservierungsmittel | Acticide SPX (Thor Chemicals) | 1 |
| Entschäumer 1 | DS 065 (Dow Corning) | 2 |
| Verdicker 1 | Aquaflow NHS 300 (Aqualon) | 9 |
| Titandioxidpigment | Tronox CR 828 (Kerr McGee) | 200 |
| Füllstoff 1 | Tonerde DB-1 (China Clay Co, Ltd.) | 52 |
| Füllstoff 2 | $CaCO_3$ 700 (Fine Chemicals Industry Co, Ltd.) | 52 |
| Mattierungsmittel | Celite 499 (Imerys) | 52 |
| Entschäumer 2 | Dispelair CF 246 (Blackburn Chemicals) | 2 |
| Polymerdispersion (Feststoffanteil 50 Gew.-%) | aus Beispielen 2 bis 7 | 350 |
| Polymer (opak) | Opaque Ultra (Rohm & Haas) | 60 |
| pH-Regler | Natronlauge, 10 gew.-%ig | 0,5 |
| Verdicker 2 | BA905, 50 gew.-%ig in Wasser | 2,0 |
| Wasser | - | 97,5 |
| Gesamt | - | 1000 |

III. Anwendungstechnische Beispiele

1. Fleckbeständigkeit (stain resistance)

Die Fleckenbeständigkeit der Anstriche wurde gemäß der modifizierten Methode "BALTM048" der BASF Australia Ltd. ermittelt. Die zu untersuchenden erfindungsgemäßen Anstrichmittel wurden auf schwarze PVC-Platten in einer Nassfilmdicke von 125 µm aufgetragen. Die Proben wurden bei 23°C für 24h ausgehärtet. Anschließend wurde eine weitere Schicht des Anstrichmittels in einer Nassfilmdicke von 125 µm auf der ersten Schicht aufgetragen, wodurch eine zweischichtige Probe erhalten wurde. Diese wurde weitere 7 Tage bei 23°C ausgehärtet.

Die Fleckbeständigkeit gegenüber roter Stempelfarbe (Artline red stamp ink), blauer Tinte (Parker Quink blue pen ink), einer 10 Gew.-% Pulverkaffee-Lösung, schwarzem Tee, Buntstift und Lippenstift wurde getestet. Flüssige Anfärbemittel wurden auf der Anstrichschicht auf einem 1 bis 2 cm breiten Streifen in einer Menge von etwa 1 ml pro Fleck aufgetragen. Buntstift und Lippenstift wurden auf einem Streifen von 1 bis 2 cm aufgetragen. Die Anfärbemittel wurden 5 Minuten auf den Anstrichschichten belassen und anschließend abgespült um überschüssiges Anfärbemittel zu entfernen. Von jedem Anstrichmittel wurden zwei Probenplatten erstellt.

Die Probenplatten wurden auf einem Scheuerbeständigkeits-Prüfgerät (Sheen wet abrasion scrub tester 903) befestigt. Ein zurechtgeschnittener Schwamm (Oates Clean) wurde mit 50 ml einer 1 %igen Teric® N9 Lösung gesättigt. Die Probe wurde mit diesem 200-mal abgewaschen. Um sicherzustellen, dass der Schwamm während des gesamten Waschvorgangs feucht war, wurden mit einem Tropftrichter 4 Tropfen Teric® N9 pro Minute auf ein Ende der Probenplatte getropft. Nach dem Waschen wurden die Probenplatten abgespült und 24 Stunden bei 23 °C getrocknet. Die Ergebnisse der Prüfung sind in Tabelle 1 in Form der ermittelten "dE"-Werte wiedergegeben. Der "dE-Wert" entspricht der Farbdifferenz zwischen einem nicht-angefärbten und gewaschenen Bereich und dem angefärbten und gewaschenen Bereich einer Probe, gemessen mit einem DataColor Spectrophotometer. Für jede Probe werden drei Punkte jedes angefärbten Bereichs gemessen. Die in Tabelle 1 angegebenen Werte sind der Mittelwert aus den jeweils drei Messergebnissen der beiden untersuchten Proben.

Tabelle 1: dE-Werte.

|  | AM 1 | AM 2 | AM 3*) | AM 4*) | AM 5*) | AM 6*) | AM 7*) |
|---|---|---|---|---|---|---|---|
| Stempelfarbe | 4,45 | 0,88 | 5,75 | 5,46 | 5,59 | 3,82 | 3,80 |
| Tinte | 0,22 | 0,16 | 0,10 | 0,13 | 0,24 | 0,38 | 0,49 |
| Kaffee | 0,81 | 1,08 | 1,85 | 1,51 | 1,57 | 2,16 | 0,83 |
| Tee | 0,96 | 0,75 | 4,04 | 2,72 | 1,88 | 1,28 | 1,48 |
| Buntstift | 0,80 | 1,88 | 0,48 | 0,25 | 0,65 | 0,53 | 0,68 |
| Lippenstift | 0,18 | 0,51 | 0,08 | 0,24 | 0,38 | 1,33 | 0,55 |
| Σ | 7,42 | 5,26 | 12,30 | 10,31 | 10,31 | 9,50 | 7,83 |
| *) Vergleichsbeispiel | | | | | | | |

2. Glanz (gloss) bzw. Polierbeständigkeit (burnish resistance)

Die Polierbeständigkeit der Anstriche wird anhand der Veränderung des Glanzes bestimmt.

Hierzu wird das Anstrichmittel mit 125 $\mu$m Spaltweite auf eine Glasplatte aufgetragen und 7 Tage lang bei Raumtemperatur getrocknet.

Die Bestimmung des Glanzes des Anstrichs erfolgt nach DIN EN ISO 2813. Der Prüfkörper wird hierzu in ein kalibriertes Reflektometer (Byk-Gardner, Tri Head) eingesetzt und der Reflektometerwert bei 20°, 60° und 85° Einstrahlwinkel bestimmt. Der ermittelte Reflektometerwert ist ein Maß für den Glanz (je höher der Wert ist, desto höher ist der Glanz).

Anschließend wird der Prüfkörper auf einem Scheuerbeständigkeits-Prüfgerät (Sheen wet abrasion scrub tester 903) befestigt. Der Kork-Block (85 mm x 40 mm x 30 mm) des Prüfgeräts wird zweifach mit einem trockenen Tuch (chux superwipe, 300 mm x 200 mm) umwickelt. Es werden 200 Scheuer-Zyklen durchgeführt. Anschließend wird der Prüfkörper vorsichtig von Abrieb befreit, 5 Minuten bei Raumtemperatur ruhen gelassen und erneut der Glanz bestimmt.

Tabelle 2. Glanz bestimmt bei einem Winkel von 20°

|  | vorher | nachher | Δ (Glanz) |
|---|---|---|---|
| AM 1 | 1,4 | 1,4 | 0,0 |
| AM 2 | 1,4 | 1,5 | 0,1 |
| AM 3*) | 1,4 | 1,7 | 0,3 |
| AM 4*) | 1,4 | 1,4 | 0,0 |
| AM 5*) | 1,4 | 1,5 | 0,1 |
| AM 6*) | 1,4 | 1,4 | 0,0 |
| AM 7*) | 1,5 | 1,6 | 0,1 |
| *) Vergleichsbeispiel | | | |

Tabelle 3. Glanz bestimmt bei einem Winkel von 60°

|  | vorher | nachher | Δ (Glanz) |
|---|---|---|---|
| AM 1 | 4,3 | 5,0 | 0,7 |
| AM 2 | 4,1 | 5,1 | 1,0 |
| AM 3*) | 4,1 | 7,7 | 3,6 |
| AM 4*) | 3,7 | 4,0 | 0,3 |

(fortgesetzt)

|  | vorher | nachher | Δ (Glanz) |
|---|---|---|---|
| AM 5*) | 3,8 | 5,2 | 1,4 |
| AM 6*) | 3,7 | 5,2 | 1,5 |
| AM 7*) | 4,0 | 7,1 | 3,1 |
| *) Vergleichsbeispiel | | | |

Tabelle 4. Glanz bestimmt bei einem Winkel von 85°

|  | vorher | nachher | Δ (Glanz) |
|---|---|---|---|
| AM 1 | 8,5 | 13,7 | 5,2 |
| AM 2 | 8,8 | 15,9 | 7,1 |
| AM 3*) | 7,5 | 21,0 | 13,5 |
| AM 4*) | 6,4 | 13,3 | 6,9 |
| AM 5*) | 6,7 | 15,7 | 9,0 |
| AM 6*) | 6,7 | 15,6 | 8,9 |
| AM 7*) | 6,8 | 17,8 | 9,0 |
| *) Vergleichsbeispiel | | | |

Aus der ermittelten Differenz des Glanzes (Δ) vor und nach dem Poliervorgang kann auf die Polierbeständigkeit der Anstriche geschlossen werden. Je geringer der Wert von Δ (Glanz), desto höher ist die Polierbeständigkeit.

2. Scheuerbeständigkeit (scrub resistance nach ASTM D 2486)

Die Scheuerbeständigkeit (Abriebfestigkeit) wurde nach ASTM D 2486 mittels einer "Gardner"-Scheuermaschine und einem standardisierten Scheuermedium (abrasiver Typ SC-2) bestimmt.

Die Anstrichmittel wurden mit einem Kastenrakel (Spaltweite 175 μm) auf Leneta-Folien aufgebracht. Anschließend wurden die Folien bei 23 °C und 50 % rel. Luftfeuchtigkeit in einer Klimakammer 14 Tage getrocknet. Die Trockenschichtdicke der erhaltenen Anstriche beträgt etwa 50 μm.

Die erhaltenen Folien werden mittig mit einem 250 μm dicken Blechstreifen unterlegt. Anschließend wird das standardisierte Scheuermedium aufgebracht und mit einer Nylonbürste solange gescheuert, bis die Beschichtung an der Stelle, an der das Blech untergelegt ist, durchgescheuert ist.

In Tabelle 5 ist die Anzahl von Doppelhüben, die erforderlich ist, um die Beschichtung an einer Stelle vollständig durchzuscheuern, gemittelt über jeweils 3 Folien, wiedergegeben.

Tabelle 5: Scheuerbeständigkeit.

|  | AM 1 | AM 2 | AM 3*) | AM 4*) | AM 5*) | AM 6*) | AM 7*) |
|---|---|---|---|---|---|---|---|
| Doppelhübe | 470 | 449 | 478 | 370 | 480 | 190 | 390 |
| *) Vergleichsbeispiel | | | | | | | |

III. Herstellung der Polymerdispersionen 8 bis 14 (PD 8 bis PD 14)

Beispiel 8: Herstellung der Polymerdispersion 8

In einem mit Dosiervorrichtung und Temperaturregelung ausgerüsteten Polymerisationsgefäß wurden vorgelegt:

Vorlage:

| | |
|---|---|
| 197,61 g | vollentsalztes Wasser |
| 17,73 g | Polystyrol-Saatlatex, (Polymerisatfeststoffgehalt 33 Gew.-%, zahlenmittlerer Teilchendurchmesser ungefähr 30 nm) |

Danach wurde unter Rühren (150 Upm) auf 95 °C erhitzt. Anschließend wurden unter Aufrechterhaltung dieser Temperatur und unter Rühren 1,13 g von Zulauf 2 zugegeben und weitere 5 Minuten gerührt. Danach wurden Zulauf 1 und die Restmenge von Zulauf 2 parallel über 2,75 Stunden zugegeben.

Zulauf 1:

| | |
|---|---|
| 371,42 g | vollentsalztes Wasser |
| 5,77 g | Dowfax 2A1 (45%ige wässrige Lösung, Alkyldiphenyloxiddisulfonat) |
| 6,46 g | Maphos 24 T ($C_{10}H_{21}O(CH_2CH_2O)_4$-P(=O)(OH)$_2$, BASF BTC) |
| 5,20 g | Sipomer PAM 100 ($CH_2$=C(CH$_3$)C(=O)O(CH$_2$CH$_2$O)$_7$-P(=O)(OH)$_2$, Rhodia) |
| 7,15 g | Acrylsäure |
| 19,50 g | Acrylamid (50%ige wässrige Lösung) |
| 362,70 g | n-Butylacrylat |
| 265,20 g | Methylmethacrylat |

Zulauf 2:

11,26 g    Natriumperoxodisulfat (7%ige wässrige Lösung)

Nach Beendigung der Zugabe wurde Zulauf 1 mit 14,15 g Wasser nachgespült. Das Polymerisationsgemisch wurde weitere 15 Minuten bei 95 °C gerührt. Das Polymerisationsgemisch wurde auf 90 °C abgekühlt und dabei wurden 2,59 g Ammoniak (25%ige wässrige Lösung) über 15 Minuten zugegeben. Danach wurden über 1 Stunde 3,90 g tert.-Butylhydroperoxid (10%ige wässrige Lösung) und 4,70 g Acetonbisulfit (13,1%ige wässrige Lösung) zugegeben. Das Polymerisationsgemisch wurde auf Raumtemperatur abgekühlt. Währenddessen wurden 18,11 g Natronlauge (10%ige wässrige Lösung) zugegeben. Anschließend wurden nacheinander 4,35 g Acticid MBS (Biozid der Firma Thor Chemie, 5%ige wässrige Lösung), 1,38 g Acticid MV (Biozid der Firma Thor Chemie, 1,5%ige wässrige Lösung) und 28,14 g vollentsalztes Wasser zugegeben.

Beispiel 9: Herstellung der Polymerdispersion 9

In einem mit Dosiervorrichtung und Temperaturregelung ausgerüsteten Polymerisationsgefäß wurden vorgelegt:

Vorlage:

| | |
|---|---|
| 197,61 g | vollentsalztes Wasser |
| 17,73 g | Polystyrol-Saatlatex, (Polymerisatfeststoffgehalt 33 Gew.-%, zahlenmittlerer Teilchendurchmesser ungefähr 30 nm) |

Danach wurde unter Rühren (150 Upm) auf 95 °C erhitzt. Anschließend wurden unter Aufrechterhaltung dieser Temperatur und unter Rühren 1,13 g von Zulauf 2 zugegeben und weitere 5 Minuten gerührt. Danach wurden Zulauf 1 und die Restmenge von Zulauf 2 parallel über 2,75 Stunden zugegeben.

Zulauf 1:

| | |
|---|---|
| 371,42 g | vollentsalztes Wasser |
| 5,77 g | Dowfax 2A1 (45%ige wässrige Lösung, Alkyldiphenyloxiddisulfonat) |
| 6,46 g | Maphos 24 T ($C_{10}H_{21}O(CH_2CH_2O)_4$-P(=O)(OH)$_2$, BASF BTC) |
| 5,85 g | Sipomer PAM 100 ($CH_2$=C(CH$_3$)C(=O)O(CH$_2$CH$_2$O)$_7$-P(=O)(OH)$_2$, Rhodia) |
| 8,45 g | Acrylsäure |
| 19,50 g | Acrylamid (50%ige wässrige Lösung) |
| 362,70 g | n-Butylacrylat |

(fortgesetzt)

| | |
|---|---|
| 263,25 g | Methylmethacrylat |

Zulauf 2:

| | |
|---|---|
| 11,26 g | Natriumperoxodisulfat (7%ige wässrige Lösung) |

Nach Beendigung der Zugabe wurde Zulauf 1 mit 14,15 g Wasser nachgespült. Das Polymerisationsgemisch wurde weitere 15 Minuten bei 95 °C gerührt. Das Polymerisationsgemisch wurde auf 90°C abgekühlt und dabei wurden 2,59 g Ammoniak (25%ige wässrige Lösung) über 15 Minuten zugegeben. Danach wurden über 1 Stunde 3,90 g tert.-Butylhydroperoxid (10%ige wässrige Lösung) und 4,70 g Acetonbisulfit (13,1 %ige wässrige Lösung) zugegeben. Das Polymerisationsgemisch wurde auf Raumtemperatur abgekühlt. Währenddessen wurden 18,11 g Natronlauge (10%ige wässrige Lösung) zugegeben. Anschließend wurden nacheinander 4,35 g Acticid MBS (5%ige wässrige Lösung), 1,38 g Acticid MV (1,5%ige wässrige Lösung) und 28,14 g vollentsalztes Wasser zugegeben.

Beispiel 10: Herstellung der Polymerdispersion 10

In einem mit Dosiervorrichtung und Temperaturregelung ausgerüsteten Polymerisationsgefäß wurden vorgelegt:

Vorlage:

| | |
|---|---|
| 197,61 g | vollentsalztes Wasser |
| 17,73 g | Polystyrol-Saatlatex, (Polymerisatfeststoffgehalt 33 Gew.-%,zahlenmittlerer Teilchendurchmesser ungefähr 30 nm) |

Danach wurde unter Rühren (150 Upm) auf 95 °C erhitzt. Anschließend wurden unter Aufrechterhaltung dieser Temperatur und unter Rühren 1,13 g von Zulauf 2 zugegeben und weitere 5 Minuten gerührt. Danach wurden Zulauf 1 und die Restmenge von Zulauf 2 parallel über 2,75 Stunden zugegeben.
Zulauf 1:

| | |
|---|---|
| 368,81 g | vollentsalztes Wasser |
| 5,77 g | Dowfax 2A1 (45%ige wässrige Lösung, Alkyldiphenyloxiddisulfonat) |
| 3,90 g | Maphos 24 T ($C_{10}H_{21}O(CH_2CH_2O)_4$-P(=O)(OH)$_2$, BASF BTC) |
| 5,85 g | Sipomer PAM 100 ($CH_2$=C($CH_3$)C(=O)O($CH_2CH_2O$)$_7$-P(=O)(OH)$_2$, Rhodia) |
| 7,15 g | Acrylsäure |
| 19,50 g | Acrylamid (50%ige wässrige Lösung) |
| 362,70 g | n-Butylacrylat |
| 264,55 g | Methylmethacrylat |

Zulauf 2:

| | |
|---|---|
| 11,26 g | Natriumperoxodisulfat (7%ige wässrige Lösung) |

Nach Beendigung der Zugabe wurde Zulauf 1 mit 14,15 g Wasser nachgespült. Das Polymerisationsgemisch wurde weitere 15 Minuten bei 95 °C gerührt. Das Polymerisationsgemisch wurde auf 90°C abgekühlt und dabei wurden 2,59 g Ammoniak (25%ige wässrige Lösung) über 15 Minuten zugegeben. Danach wurden über 1 Stunde 3,90 g tert.-Butylhydroperoxid (10%ige wässrige Lösung) und 4,70 g Acetonbisulfit (13,1 %ige wässrige Lösung) zugegeben. Das Polymerisationsgemisch wurde auf Raumtemperatur abgekühlt. Währenddessen wurden 18,11 g Natronlauge (10%ige wässrige Lösung) zugegeben. Anschließend wurden nacheinander 4,35 g Acticid MBS (5%ige wässrige Lösung), 1,38 g Acticid MV (1,5%ige wässrige Lösung) und 28,14 g vollentsalztes Wasser zugegeben.

Beispiel 11: Herstellung der Polymerdispersion 11

In einem mit Dosiervorrichtung und Temperaturregelung ausgerüsteten Polymerisationsgefäß wurden vorgelegt:

Vorlage:

| | |
|---|---|
| 197,61 g | vollentsalztes Wasser |
| 17,73 g | Polystyrol-Saatlatex (Polymerisatfeststoffgehalt 33 Gew.-%,zahlenmittlerer Teilchendurchmesser ungefähr 30 nm) |

Danach wurde unter Rühren (150 Upm) auf 95 °C erhitzt. Anschließend wurden unter Aufrechterhaltung dieser Temperatur und unter Rühren 1,13 g von Zulauf 2 zugegeben und weitere 5 Minuten gerührt. Danach wurden Zulauf 1 und die Restmenge von Zulauf 2 parallel über 2,75 Stunden zugegeben.

Zulauf 1:

| | |
|---|---|
| 368,81 g | vollentsalztes Wasser |
| 5,77 g | Dowfax 2A1 (45%ige wässrige Lösung, Alkyldiphenyloxiddisulfonat) |
| 3,90 g | Maphos 24 T ($C_{10}H_{21}O(CH_2CH_2O)_4$-P(=O)(OH)$_2$, BASF BTC) |
| 4,88 g | Sipomer PAM 100 ($CH_2$=C($CH_3$)C(=O)O($CH_2CH_2O)_7$-P(=O)(OH)$_2$, Rhodia) |
| 7,15 g | Acrylsäure |
| 19,50 g | Acrylamid (50%ige wässrige Lösung) |
| 362,70 g | n-Butylacrylat |
| 265,52 g | Methylmethacrylat |

Zulauf 2:

| | |
|---|---|
| 11,26 g | Natriumperoxodisulfat (7%ige wässrige Lösung) |

Nach Beendigung der Zugabe wurde Zulauf 1 mit 14,15 g Wasser nachgespült. Das Polymerisationsgemisch wurde weitere 15 Minuten bei 95 °C gerührt. Das Polymerisationsgemisch wurde auf 90°C abgekühlt und dabei wurden 2,59 g Ammoniak (25%ige wässrige Lösung) über 15 Minuten zugegeben. Danach wurden über 1 Stunde 3,90 g tert.-Butylhydroperoxid (10%ige wässrige Lösung) und 4,70 g Acetonbisulfit (13,1 %ige wässrige Lösung) zugegeben. Das Polymerisationsgemisch wurde auf Raumtemperatur abgekühlt. Währenddessen wurden 18,11 g Natronlauge (10%ige wässrige Lösung) zugegeben. Anschließend wurden nacheinander 4,35 g Acticid MBS (5%ige wässrige Lösung), 1,38 g Acticid MV (1,5%ige wässrige Lösung) und 28,14 g vollentsalztes Wasser zugegeben.

Beispiel 12: Herstellung der Polymerdispersion 12 (nicht erfindungsgemäß)

In einem mit Dosiervorrichtung und Temperaturregelung ausgerüsteten Polymerisationsgefäß wurden vorgelegt:

Vorlage:

| | |
|---|---|
| 197,61 g | vollentsalztes Wasser |
| 17,73 g | Polystyrol-Saatlatex, (Polymerisatfeststoffgehalt 33 Gew.-%,zahlenmittlerer Teilchendurchmesser ungefähr 30 nm) |

Danach wurde unter Rühren (150 Upm) auf 95 °C erhitzt. Anschließend wurden unter Aufrechterhaltung dieser Temperatur und unter Rühren 1,13 g von Zulauf 2 zugegeben und weitere 5 Minuten gerührt. Danach wurden Zulauf 1 und die Restmenge von Zulauf 2 parallel über 2,75 Stunden zugegeben.

Zulauf 1:

| | |
|---|---|
| 371,42 g | vollentsalztes Wasser |
| 5,77 g | Dowfax 2A1 (45%ige wässrige Lösung, Alkyldiphenyloxiddisulfonat) |
| 6,46 g | Maphos 24 T ($C_{10}H_{21}O(CH_2CH_2O)_4$-P(=O)(OH)$_2$, BASF BTC) |
| 7,15 g | Acrylsäure |
| 19,50 g | Acrylamid (50%ige wässrige Lösung) |
| 365,70 g | n-Butylacrylat |

(fortgesetzt)

267,40 g     Methylmethacrylat

Zulauf 2:

11,26 g     Natriumperoxodisulfat (7%ige wässrige Lösung)

Nach Beendigung der Zugabe wurde Zulauf 1 mit 14,15 g Wasser nachgespült. Das Polymerisationsgemisch wurde weitere 15 Minuten bei 95 °C gerührt. Das Polymerisationsgemisch wurde auf 90°C abgekühlt und dabei wurden 2,59 g Ammoniak (25%ige wässrige Lösung) über 15 Minuten zugegeben. Danach wurden über 1 Stunde 3,90 g tert.-Butylhydroperoxid (10%ige wässrige Lösung) und 4,70 g Acetonbisulfit (13,1%ige wässrige Lösung) zugegeben. Das Polymerisationsgemisch wurde auf Raumtemperatur abgekühlt. Währenddessen wurden 18,11 g Natronlauge (10%ige wässrige Lösung) zugegeben. Anschließend wurden nacheinander 4,35 g Acticid MBS (5%ige wässrige Lösung), 1,38 g Acticid MV (1,5%ige wässrige Lösung) und 28,14 g vollentsalztes Wasser zugegeben.

Beispiel 13: Herstellung der Polymerdispersion 13 (nicht erfindungsgemäß)

In einem mit Dosiervorrichtung und Temperaturregelung ausgerüsteten Polymerisationsgefäß wurden vorgelegt:

Vorlage:

197,61 g     vollentsalztes Wasser

17,73 g     Polystyrol-Saatlatex, (Polymerisatfeststoffgehalt 33 Gew.-%, zahlenmittlerer Teilchendurchmesser ungefähr 30 nm)

Danach wurde unter Rühren (150 Upm) auf 95 °C erhitzt. Anschließend wurden unter Aufrechterhaltung dieser Temperatur und unter Rühren 1,13 g von Zulauf 2 zugegeben und weitere 5 Minuten gerührt. Danach wurden Zulauf 1 und die Restmenge von Zulauf 2 parallel über 2,75 Stunden zugegeben.

Zulauf 1:

364,83 g     vollentsalztes Wasser
5,77 g      Dowfax 2A1 (45%ige wässrige Lösung, Alkyldiphenyloxiddisulfonat)
5,85 g      Sipomer PAM 100 ($CH_2$=C($CH_3$)C(=O)O($CH_2CH_2O)_7$-P(=O)(OH)$_2$, Rhodia)
7,15 g      Acrylsäure
19,50 g     Acrylamid (50%ige wässrige Lösung)
362,70 g     n-Butylacrylat
264,55 g     Methylmethacrylat

Zulauf 2:

11,26 g     Natriumperoxodisulfat (7%ige wässrige Lösung)

Nach Beendigung der Zugabe wurde Zulauf 1 mit 14,15 g Wasser nachgespült. Das Polymerisationsgemisch wurde weitere 15 Minuten bei 95 °C gerührt. Das Polymerisationsgemisch wurde auf 90°C abgekühlt und dabei wurden 2,59 g Ammoniak (25%ige wässrige Lösung) über 15 Minuten zugegeben. Danach wurden über 1 Stunde 3,90 g tert.-Butylhydroperoxid (10%ige wässrige Lösung) und 4,70 g Acetonbisulfit (13,1 %ige wässrige Lösung) zugegeben. Das Polymerisationsgemisch wurde auf Raumtemperatur abgekühlt. Währenddessen wurden 18,11 g Natronlauge (10%ige wässrige Lösung) zugegeben. Anschließend wurden nacheinander 4,35 g Acticid MBS (5%ige wässrige Lösung), 1,38 g Acticid MV (1,5%ige wässrige Lösung) und 28,14 g vollentsalztes Wasser zugegeben.

Beispiel 14: Herstellung der Polymerdispersion 14 (nicht erfindungsgemäß)

In einem mit Dosiervorrichtung und Temperaturregelung ausgerüsteten Polymerisationsgefäß wurden vorgelegt:

Vorlage:

197,61 g vollentsalztes Wasser

17,73 g Polystyrol-Saatlatex, (Polymerisatfeststoffgehalt 33 Gew.-%, zahlenmittlerer Teilchendurchmesser ungefähr 30 nm)

Danach wurde unter Rühren (150 Upm) auf 95 °C erhitzt. Anschließend wurden unter Aufrechterhaltung dieser Temperatur und unter Rühren 1,13 g von Zulauf 2 zugegeben und weitere 5 Minuten gerührt. Danach wurden Zulauf 1 und die Restmenge von Zulauf 2 parallel über 2,75 Stunden zugegeben.

Zulauf 1:

364,83 g vollentsalztes Wasser

5,77 g Dowfax 2A1 (45%ige wässrige Lösung, Alkyldiphenyloxiddisulfonat)

7,15 g Acrylsäure

19,50 g Acrylamid (50%ige wässrige Lösung)

365,69 g n-Butylacrylat

267,41 g Methylmethacrylat

Zulauf 2:

11,26 g Natriumperoxodisulfat (7%ige wässrige Lösung)

Nach Beendigung der Zugabe wurde Zulauf 1 mit 14,15 g Wasser nachgespült. Das Polymerisationsgemisch wurde weitere 15 Minuten bei 95 °C gerührt. Das Polymerisationsgemisch wurde auf 90°C abgekühlt und dabei wurden 2,59 g Ammoniak (25%ige wässrige Lösung) über 15 Minuten zugegeben. Danach wurden über 1 Stunde 3,90 g tert.-Butylhydroperoxid (10%ige wässrige Lösung) und 4,70 g Acetonbisulfit (13,1%ige wässrige Lösung) zugegeben. Das Polymerisationsgemisch wurde auf Raumtemperatur abgekühlt. Währenddessen wurden 18,11 g Natronlauge (10%ige wässrige Lösung) zugegeben. Anschließend wurden nacheinander 4,35 g Acticid MBS (5%ige wässrige Lösung), 1,38 g Acticid MV (1,5%ige wässrige Lösung) und 28,14 g vollentsalztes Wasser zugegeben.

IV. Herstellung der Anstrichmittel 8 bis 14 (AM 8 bis AM 14)

Die einzelnen Komponenten wurden in der Menge (Gewichtsteile) und in der in Tabelle B angegebenen Reihenfolge unter Rühren mit einem Zahnscheibenrührer zudosiert. Nach Zugabe des Entschäumer 1 wurde das Gemisch 10 Minuten bei geringer Drehzahl homogenisiert. Anschließend wurde mit der Zugabe der Komponenten fortgefahren. Nach Zugabe des Mattierungsmittels wurde die Drehzahl auf 2000 U/min erhöht und 20 Minuten dispergiert, bis die Pigmentteilchen einen Durchmesser < 50 $\mu$m aufwiesen. Der Verdicker 3 wurde zugegeben und das Gemisch wurde weitere 5 Minuten bei reduzierter Drehzahl homogenisiert. Dann gab man unter Rühren die restlichen Komponenten zu und ließ, falls erforderlich, auf Raumtemperatur abkühlen.

Tabelle B: Formulierung der Anstrichmittel AM 8 bis AM 14

| Komponente | AM 8 | AM 9 | AM 10 | AM 11 | AM 12[*] | AM 13[*] | AM 14[*] |
|---|---|---|---|---|---|---|---|
| Wasser | 200,0 | 200,0 | 200,0 | 200,0 | 200,0 | 200,0 | 200,0 |
| Dispergiermittel 1 | 12,0 | 12,0 | 12,0 | 12,0 | 12,0 | 12,0 | 12,0 |
| Konservierungsmittel 1 | 1,0 | 1,0 | 1,0 | 1,0 | 1,0 | 1,0 | 1,0 |
| Verdicker 1 | 1,0 | 1,0 | 1,0 | 1,0 | 1,0 | 1,0 | 1,0 |
| Verdicker 2 | 4,0 | 4,0 | 4,0 | 4,0 | 4,0 | 4,0 | 4,0 |
| Entschäumer 1 | 3,0 | 3,0 | 3,0 | 3,0 | 3,0 | 3,0 | 3,0 |
| Titandioxidpigment | 180,0 | 180,0 | 180,0 | 180,0 | 180,0 | 180,0 | 180,0 |
| Diatomeenerde | 10,0 | 10,0 | 10,0 | 10,0 | 10,0 | 10,0 | 10,0 |
| Mattierungsmittel | 15,0 | 15,0 | 15,0 | 15,0 | 15,0 | 15,0 | 15,0 |
| Glas Bubbles S22 | 5,0 | 5,0 | 5,0 | 5,0 | 5,0 | 5,0 | 5,0 |
| Füllstoff 1 | 35,0 | 35,0 | 35,0 | 35,0 | 35,0 | 35,0 | 35,0 |
| Füllstoff 2 | 90,0 | 90,0 | 90,0 | 90,0 | 90,0 | 90,0 | 90,0 |
| ZnO Zinkweiß | 23,0 | 23,0 | 23,0 | 23,0 | 23,0 | 23,0 | 23,0 |
| Verdicker 3 | 8,0 | 8,0 | 8,0 | 8,0 | 8,0 | 8,0 | 8,0 |
| PM 8 (FA 48,6 Gew.-%) | 352,8 | - | - | - | - | - | - |
| PM 9 (FA 48,2 Gew.-%) | - | 355,7 | - | - | - | - | - |
| PM 10 (FA 48,4 Gew.-%) | - | - | 354,3 | - | - | - | - |
| PM 11 (FA 49,1 Gew.-%) | - | - | - | 349,2 | - | - | - |
| PM 12 (FA 49,1 Gew.-%) | - | - | - | - | 349,2 | - | - |
| PM 13 (FA 49,1 Gew.-%) | - | - | - | - | - | 349,2 | - |
| PM 14 (FA 49,4 Gew.-%) | - | - | - | - | - | - | 347,1 |
| Filmbildehilfsmittel 1 | 10,0 | 10,0 | 10,0 | 10,0 | 10,0 | 10,0 | 10,0 |
| Wasser | 50,2 | 47,3 | 48,7 | 53,8 | 53,8 | 53,8 | 55,9 |
| Gesamt | 1000,0 | 1000,0 | 1000,0 | 1000,0 | 1000,0 | 1000,0 | 1000,0 |

[*]                        Vergleichsbeispiel

FA:                        Feststoffanteil

Dispergiermittel 1         Pigmentverteiler MD 20, 25 %ig der Fa. BASF

Konservierungsmittel 1     Acticid SPX der Fa. Thor Chemie

Verdicker 1                Collacral® LR 8989, 20%ig der Fa. BASF

Verdicker 2                Optigel® CK, Rockwood Additives

Entschäumer 1              Byk® 037, Byk

Titandioxidpigment         Tronox® CR 828 der Fa. Tronox

Diatomeenerde              Celite® 281 der Fa. World Minerals

| Mattierungsmittel | Optimatt® 2550 der Fa. World Minerals |
| Glas Bubbles S22 | Fa. 3M Deutschland |
| Füllstoff 1 | Minex® 10 der Fa. Unimin Speciality Chemicals |
| Füllstoff 2 | Minex® 4 der Fa. Unimin Speciality Chemicals |
| Verdicker 3 | Collacral® LR 8990, 40 %ig, der Fa. BASF |
| Filmbildehilfsmittel 1 | Optifilm Enhancer 300 der Fa. Eastman Chemicals |

V. Anwendungstechnische Beispiele der Anstrichmittel AM 8 bis AM 14 (AM 8 bis AM 14)

V.1 Burnish resistance (Polierbeständigkeit)

Die Anstrichmittel AM 8, AM 9, AM 10, AM 11, AM 12, AM 13 und AM 14 wurden mit 200 $\mu$m Spaltweite auf Leneta-Folie (PVC) aufgezogen und 7 Tage bei 23°C und 50 % relativer Luftfeuchtigkeit getrocknet. Danach wurde der Glanz der Filme unter 20, 60 und 85° Einstrahlwinkel mit einem kalibrierten Reflektometer entsprechend DIN EN ISO 2813 gemessen. Die Filme wurden dann in ein Scheuergerät nach DIN EN I-SO1199 eingespannt. Anstelle des Scheuervlieses wurde ein mit einem Baumwolltuch umwickelter Schwamm verwendet und der Film wurde trocken mit 500 Doppelhüben gescheuert. Anschließend wurde abgewischt und erneut der Glanz bei 20, 60 und 85° bestimmt. Die Ergebnisse sind in Tabelle 6 zusammengefasst.

Tabelle 6: Burnish resistance

|  | AM 8 | AM 9 | AM 10 | AM 11 | AM 12*) | AM 13*) | AM 14*) |
|---|---|---|---|---|---|---|---|
|  |  |  |  |  |  |  |  |
| Glanz davor 20° | 1,1 | 1,1 | 1,1 | 1,1 | 1,1 | 1,1 | 1,1 |
| Glanz danach 20° | 1,1 | 1,1 | 1,1 | 1,1 | 1,1 | 1,1 | 1,1 |
| $\Delta$ Glanz | 0,0 | 0,0 | 0,0 | 0,0 | 0,0 | 0,0 | 0,0 |
|  |  |  |  |  |  |  |  |
| Glanz davor 60° | 2,6 | 2,6 | 2,6 | 2,6 | 2,7 | 2,6 | 2,7 |
| Glanz danach 60° | 2,6 | 2,7 | 2,8 | 2,8 | 2,8 | 2,8 | 2,8 |
| $\Delta$ Glanz | 0,0 | 0,1 | 0,2 | 0,2 | 0,1 | 0,2 | 0,1 |
|  |  |  |  |  |  |  |  |
| Glanz davor 85° | 1,1 | 1,2 | 1,2 | 1,1 | 1,2 | 1,2 | 1,3 |
| Glanz danach 85° | 1,5 | 1,6 | 1,7 | 1,7 | 1,7 | 1,7 | 1,8 |
| $\Delta$ Glanz | 0,4 | 0,4 | 0,5 | 0,6 | 0,5 | 0,5 | 0,5 |

Aus der ermittelten Differenz des Glanzes ($\Delta$) vor und nach dem Poliervorgang kann auf die Polierbeständigkeit der Anstriche geschlossen werden. Je geringer der Wert von $\Delta$ (Glanz), desto höher ist die Polierbeständigkeit.

V.2 Nassabrieb (Scheuerbeständigkeit)

Die Anstrichmittel AM 8, AM 9, AM 10 und AM 11 wurden mit 400 $\mu$m Spaltweite auf Leneta-Folie (PVC) aufgebracht. Die Beschichtung wurde 7 Tage bei 23° C und 50 % rel. Luftfeuchtigkeit getrocknet. Die Bestimmung der Nassabriebfestigkeit für die Anstrichmittel AM 8, AM 9, AM 10 und AM 11 erfolgte gemäß DIN EN ISO 11998. Zur Bewertung legte man eine Einteilung in 5 Klassen zugrunde.

Klasse 1 < 5 $\mu$m bei 200 Scheuerzyklen
Klasse 2 $\geq$ 5 $\mu$m und < 20 $\mu$m bei 200 Scheuerzyklen
Klasse 3 $\geq$ 20 $\mu$m und < 70 $\mu$m bei 200 Scheuerzyklen

Klasse 4 < 70 μm bei 40 Scheuerzyklen
Klasse 5 ≥ 70 μm bei 40 Scheuerzyklen

Die Ergebnisse sind in Tabelle 7 zusammengefasst.

Tabelle 7: Scheuerbeständigkeit

| Anstrichmittel | AM 8 | AM 9 | AM 10 | AM 11 |
|---|---|---|---|---|
| Mittelwert in μm | 5 | 8 | 7 | 7 |
| Klasse | 2 | 2 | 2 | 2 |

V.3 Fleckbeständigkeit (Stain resistance)

Die Anstrichmittel wurden in 2 Schichten mit jeweils 120 μm Spaltweite auf Leneta-Folie aufgezogen und 7 Tage bei 23°C und 50 % rel. Luftfeuchtigkeit getrocknet. Dann wurden folgende Prüfflüssigkeiten in einer Menge von ca. 1 ml auf die Oberfläche aufgebracht: Schwarzer Tee, Kaffeelösung (Pulverkaffee, 4 %ig), Rotwein, rote Beete, Lippenstift 1 (Creamy and Care, Manhattan), Lippenstift 2 (X-treme Last and Shine, Manhattan), Senf (Tomy mittelscharf) und Ketchup (Knorr). Nach 5 min Einwirkzeit wurden die Prüfsubstanzen abgewaschen und der Film wurde in ein Scheuergerät eingespannt. Scheuervlies und Scheuerspur wurden mit 4 ml 0,25 %iger Lösung von Marlon A 350 (Tensid auf Basis von Alkylbenzolsulfonat von Sasol Olefins & Surfactants, Hamburg, Deutschland) angefeuchtet und 100 Doppelhübe gescheuert. Nach Abspülen und Trocknen wurden Lab-Werte an den angeschmutzten und nicht angeschmutzen Stellen gemessen und daraus die Farbdifferenz "deltaE" berechnet. Für jeden Fleck wurden 2 Messwerte, für die weiße Vergleichsfläche 3 Messwerte genommen und gemittelt. Insgesamt wurden 3 Filme pro Farbe in dieser Weise geprüft und die resultierenden "deltaE"-Werte wiederum gemittelt. Je kleiner der "deltaE"-Wert ist, um so besser ist die Fleckbeständigkeit und desto geringer ist die bleibende Verfärbung des Films. Die Ergebnisse sind in Tabelle 8 zusammengefasst.

Tabelle 8: Fleckbeständigkeit

| deltaE | AM 8 | AM 9 | AM 10 | AM 11 | AM 12*) | AM 13*) | AM 14*) |
|---|---|---|---|---|---|---|---|
| deltaE schwarzer Tee | 0,48 | 0,44 | 0,46 | 0,32 | 0,78 | 1,01 | 1,22 |
| deltaE Kaffee | 0,73 | 0,78 | 0,72 | 0,59 | 0,97 | 1,21 | 2,06 |
| deltaE Rotwein | 0,11 | 0,11 | 0,16 | 0,15 | 0,26 | 0,17 | 0,23 |
| deltaE rote Bete | 1,01 | 1,19 | 1,13 | 1,03 | 1,54 | 1,8 | 2,55 |
| deltaE Lippenstift 1 | 0,18 | 0,3 | 0,22 | 0,25 | 0,38 | 0,36 | 0,26 |
| deltaE Lippenstift 2 | 0,59 | 0,4 | 0,4 | 0,36 | 0,62 | 0,3 | 0,43 |
| deltaE Senf | 0,25 | 0,25 | 0,27 | 0,23 | 0,21 | 0,13 | 0,18 |
| deltaE Ketchup | 0,07 | 0,19 | 0,19 | 0,18 | 0,37 | 0,14 | 0,14 |
| | | | | | | | |
| Σ | 3,42 | 3,66 | 3,55 | 3,11 | 5,13 | 5,12 | 7,07 |
| Mittelwerte von 8 deltaE | 0,43 | 0,46 | 0,44 | 0,39 | 0,64 | 0,64 | 0,88 |
| *) Vergleichsbeispiel | | | | | | | |

Man erkennt, dass die erfindungsgemäßen Anstrichmittel eine bessere Fleckbeständigkeit (stain resistance) aufweisen als die Vergleichsanstrichmittel.

**Patentansprüche**

1. Verwendung einer Polymerdispersion (PD), enthaltend:

   i) wenigstens ein Polymer (P), erhältlich durch radikalische Emulsionspolymerisation wenigstens eines ethylenisch ungesättigten Monomers (M1) und wenigstens eines davon verschiedenen Monomers (M2), das ausgewählt ist unter Estern der Phosphonsäure oder der Phosphorsäure mit gegebenenfalls alkoxylierten Hydroxyalkyl(meth)acrylaten, und

ii) wenigstens einen Emulgator (E), ausgewählt unter Verbindungen der Formel (I)

$$R^1\text{-}O\text{-}(AO)_m\text{-}P(=O)(OR^2)(OH) \qquad (I)$$

worin

m für eine ganze Zahl von 0 bis 20 steht,
AO für Alkylenoxy steht,
$R^1$ für $C_8$-$C_{30}$-Alkyl steht und
$R^2$ für H oder eine Gruppe -$(AO)_m$-$R^{2a}$ steht, worin $R^{2a}$ die für $R^1$ gegebene Bedeutung aufweist und AO und m eine der zuvor gegebenen Bedeutungen aufweisen,

und den Salzen der Verbindungen der Formel (I);

in Anstrichmitteln zur Verbesserung der Scheuerbeständigkeit der daraus hergestellten Anstriche und/oder zur Verbesserung der Polierbeständigkeit der daraus hergestellten Anstriche und/oder zur Verbesserung der Fleckbeständigkeit der daraus hergestellten Anstriche und/oder zur Verbesserung der Pigmentverteilung in den daraus hergestellten Anstrichen und/oder zur Verringerung der Emission von flüchtigen organischen Verbindungen durch die daraus hergestellten Anstriche

wobei das Polymer (P) durch eine Emulsionspolymerisation erhältlich ist, bei der der Anteil der Monomere (M1) im Bereich von 95 bis 99,99 Gew.-%, bezogen auf das Gesamtgewicht der zur Emulsionspolymerisation eingesetzten Monomere, liegt,

wobei die Monomere (M1) ausschließlich ausgewählt sind unter den Hauptmonomeren (M1.a) und den Nebenmonomeren (M1.b),

und wobei mindestens 50 Gew.-% der Monomere (M1), bezogen auf das Gesamtgewicht der Monomere (M1), ausgewählt sind unter Estern $\alpha,\beta$-ethylenisch ungesättigter Mono- und Dicarbonsäuren mit $C_1$-$C_{30}$-Alkanolen, Estern von Vinyl- oder Allylalkohol mit $C_1$-$C_{30}$-Monocarbonsäuren, ethylenisch ungesättigten Nitrilen, Vinylhalogeniden, Vinylidenhalogeniden und Mischungen davon (= Monomere M1.a),

und wobei weniger als 50 Gew.-% der Monomere (M1), bezogen auf das Gesamtgewicht der Monomere (M1), ausgewählt sind unter ethylenisch ungesättigten Mono- und Dicarbonsäuren, den Anhydriden und Halbestern ethylenisch ungesättigter Dicarbonsäuren, (Meth)acrylamiden, $C_1$-$C_{10}$-Hydroxyalkyl(meth)-acrylaten, $C_1$-$C_{10}$-Hydroxyalkyl(meth)acrylamiden und Mischungen davon (= Monomere M1.b).

2. Verwendung nach Anspruch 1, wobei das Polymer (P) durch eine Emulsionspolymerisation erhältlich ist, bei der wenigstens ein Teil der Monomere (M1) ausgewählt ist unter Estern $\alpha,\beta$-ethylenisch ungesättigter Mono- und Dicarbonsäuren mit $C_1$-$C_{30}$-Alkanolen.

3. Verwendung nach einem der vorhergehenden Ansprüche, wobei das Polymer (P) durch eine Emulsionspolymerisation erhältlich ist, bei der mindestens 60 Gew.-% und bevorzugt mindestens 80 Gew.-% der Monomere (M1), bezogen auf das Gesamtgewicht der Monomere (M1), ausgewählt sind unter Estern $\alpha,\beta$-ethylenisch ungesättigter Mono- und Dicarbonsäuren mit $C_1$-$C_{30}$-Alkanolen, Estern von Vinyl- oder Allylalkohol mit $C_1$-$C_{30}$-Monocarbonsäuren, ethylenisch ungesättigten Nitrilen, Vinylhalogeniden, Vinylidenhalogeniden und Mischungen davon (= Monomere M1.a).

4. Verwendung nach einem der vorhergehenden Ansprüche, wobei das Polymer (P) durch eine Emulsionspolymerisation erhältlich ist, bei der weniger als 40 Gew.-%, bevorzugt weniger als 20 Gew.-% der Monomere (M1), bezogen auf das Gesamtgewicht der Monomere (M1), ausgewählt sind unter ethylenisch ungesättigten Mono- und Dicarbonsäuren, den Anhydriden und Halbestern ethylenisch ungesättigter Dicarbonsäuren, (Meth)acrylamiden, $C_1$-$C_{10}$-Hydroxyalkyl(meth)-acrylaten, $C_1$-$C_{10}$-Hydroxyalkyl(meth)acrylamiden und Mischungen davon (= Monomere M1.b).

5. Verwendung nach einem der vorhergehenden Ansprüche, wobei das Polymer (P) durch eine Emulsionspolymerisation erhältlich ist, bei der wenigstens ein Teil der Monomere (M2) ausgewählt ist unter Estern der Phosphorsäure mit gegebenenfalls alkoxylierten Hydroxyalkyl(meth)acrylaten und Mischungen davon.

6. Verwendung nach Anspruch 5, wobei das Polymere (P) durch eine Emulsionspolymerisation erhältlich ist, bei der wenigstens ein Teil der Monomere (M2) ausgewählt ist unter Monoestern der Phosphorsäure mit gegebenenfalls alkoxylierten Hydroxyalkyl(meth)acrylaten.

7. Verwendung nach einem der vorhergehenden Ansprüche, wobei das Polymer (P) durch eine Emulsionspolymerisation erhältlich ist, bei der der Anteil an Monomeren (M2) im Bereich von 0,01 bis 5 Gew.-%, bezogen auf das Gesamtgewicht der zur Emulsionspolymerisation eingesetzten Monomere, liegt.

8. Verwendung nach einem der vorhergehenden Ansprüche, wobei die Polymerdispersion (PD) bis zu 20 Gew.-%, bezogen auf das Gesamtgewicht der zur Emulsionspolymerisation eingesetzten Monomere, wenigstens eines Emulgators (E) enthält.

9. Verwendung nach einem der vorhergehenden Ansprüche, wobei als Komponente (M1.a) eine Mischung aus n-Butylacrylat und Methylmethacrylat eingesetzt wird.

10. Verwendung nach Anspruch 9, wobei die Monomere (M1.b) ausgewählt sind unter Acrylsäure, Methacrylsäure, Acrylamid, Methacrylamid und Mischungen davon.

11. Anstrichmittel enthaltend eine Polymerdispersion (PD), wobei die Polymerdispersion (PD):

i) wenigstens ein Polymer (P), erhältlich durch radikalische Emulsionspolymerisation wenigstens eines ethylenisch ungesättigten Monomers (M1) und wenigstens eines davon verschiedenen Monomers (M2), das ausgewählt ist unter Estern der Phosphonsäure oder der Phosphorsäure mit gegebenenfalls alkoxylierten Hydroxyalkyl(meth)acrylaten, und

ii) wenigstens einen Emulgator (E), ausgewählt unter Verbindungen der Formel (I)

$$R^1\text{-O-}(AO)_m\text{-P(=O)(}OR^2)(OH) \qquad \text{(I)}$$

worin

m für eine ganze Zahl von 0 bis 20 steht,
AO für Alkylenoxy steht,
$R^1$ für $C_8$-$C_{30}$-Alkyl steht und
$R^2$ für H oder eine Gruppe -$(AO)_m$-$R^{2a}$ steht, worin $R^{2a}$ die für $R^1$ gegebene Bedeutung aufweist und AO und m eine der zuvor gegebenen Bedeutungen aufweisen,

und den Salzen der Verbindungen der Formel (I), enthält; und

wobei die Polymerdispersionen (PD) zur Verbesserung der Scheuerbeständigkeit von aus den Anstrichmitteln hergestellten Anstrichen und/oder zur Verbesserung der Polierbeständigkeit von aus den Anstrichmitteln hergestellten Anstrichen und/oder zur Verbesserung der Fleckbeständigkeit von aus den Anstrichmitteln hergestellten Anstrichen und/oder zur Verbesserung der Pigmentverteilung in aus den Anstrichmitteln hergestellten Anstrichen und/oder zur Verringerung der Emission von flüchtigen organischen Verbindungen durch aus den Anstrichmitteln hergestellten Anstrichen eingesetzt wird
wobei das Polymer (P) durch eine Emulsionspolymerisation erhältlich ist, bei der der Anteil der Monomere (M1) im Bereich von 95 bis 99,99 Gew.-%, bezogen auf das Gesamtgewicht der zur Emulsionspolymerisation eingesetzten Monomere, liegt,
wobei die Monomere (M1) ausschließlich ausgewählt sind den Hauptmonomeren (M1.a) und den Nebenmonomeren (M1.b),
und wobei mindestens 50 Gew.-% der Monomere (M1), bezogen auf das Gesamtgewicht der Monomere (M1), ausgewählt sind unter Estern $\alpha,\beta$-ethylenisch ungesättigter Mono- und Dicarbonsäuren mit $C_1$-$C_{30}$-Alkanolen, Estern von Vinyl- oder Allylalkohol mit $C_1$-$C_{30}$-Monocarbonsäuren, ethylenisch ungesättigten Nitrilen, Vinylhalogeniden, Vinylidenhalogeniden und Mischungen davon (= Monomere M1.a),
und wobei weniger als 50 Gew.-% der Monomere (M1), bezogen auf das Gesamtgewicht der Monomere (M1), ausgewählt sind unter ethylenisch ungesättigten Mono- und Dicarbonsäuren, den Anhydriden und Halbestern ethylenisch ungesättigter Dicarbonsäuren, (Meth)acrylamiden, $C_1$-$C_{10}$-Hydroxyalkyl(meth)-acrylaten, $C_1$-$C_{10}$-Hydroxyalkyl(meth)acrylamiden und Mischungen davon (= Monomere M1.b).

**12.** Polymerdispersion (PD) enthaltend:

i) wenigstens ein Polymer (P) erhältlich durch radikalische Emulsionspolymerisation einer Monomerzusammensetzung enthaltend:

- 95 bis 99,99 Gew.-%, bezogen auf das Gesamtgewicht der zur Emulsionspolymerisation eingesetzten Monomere, eines ethylenisch ungesättigten Monomers (M1); und
- 0,01 bis 5 Gew.-%, bezogen auf das Gesamtgewicht der zur Emulsionspolymerisation eingesetzten Monomere, wenigstens eines davon verschiedenen Monomers (M2), das ausgewählt ist unter Estern der Phosphonsäure oder der Phosphorsäure mit gegebenenfalls alkoxylierten Hydroxyalkyl(meth)acrylaten; und

ii) wenigstens einen Emulgator (E), ausgewählt unter Verbindungen der Formel (I) und den Salzen der Verbindungen der Formel (I),

$$R^1\text{-O-}(AO)_m\text{-P}(=O)(OR^2)(OH) \qquad (I)$$

worin

m für eine ganze Zahl von 0 bis 20 steht,
AO für Alkylenoxy steht,
$R^1$ für $C_8$-$C_{30}$-Alkyl steht und
$R^2$ für H oder eine Gruppe $\text{-}(AO)_m\text{-}R^{2a}$ steht, worin $R^{2a}$ die für $R^1$ gegebene Bedeutung aufweist und AO und m eine der zuvor gegebenen Bedeutungen aufweisen,

wobei die Monomere (M1) ausschließlich ausgewählt sind den Hauptmonomeren (M1.a) und den Nebenmonomeren (M1b),

und wobei mindestens 50 Gew.-% der Monomere (M1), bezogen auf das Gesamtgewicht der Monomere (M1), ausgewählt sind unter Estern $\alpha,\beta$-ethylenisch ungesättigter Mono- und Dicarbonsäuren mit $C_1$-$C_{30}$-Alkanolen, Estern von Vinyl- oder Allylalkohol mit $C_1$-$C_{30}$-Monocarbonsäuren, ethylenisch ungesättigten Nitrilen, Vinylhalogeniden, Vinylidenhalogeniden und Mischungen davon (= Monomere M1.a),
und wobei weniger als 50 Gew.-% der Monomere (M1), bezogen auf das Gesamtgewicht der Monomere (M1), ausgewählt sind unter ethylenisch ungesättigten Mono- und Dicarbonsäuren, den Anhydriden und Halbestern ethylenisch ungesättigter Dicarbonsäuren, (Meth)acrylamiden, $C_1$-$C_{10}$-Hydroxyalkyl(meth)acrylaten, $C_1$-$C_{10}$-Hydroxyalkyl(meth)acrylamiden und Mischungen davon (= Monomere M1.b).

**13.** Polymerdispersion (PD) nach Anspruch 12, worin das Polymer (P) durch eine Emulsionspolymerisation erhältlich ist, bei der wenigstens ein Teil der Monomere (M1) ausgewählt ist unter Estern $\alpha,\beta$-ethylenisch ungesättigter Mono- und Dicarbonsäuren mit $C_1$-$C_{30}$-Alkanolen.

**14.** Polymerdispersion (PD) nach einem der Ansprüche 12 oder 13, worin das Polymer (P) durch eine Emulsionspolymerisation erhältlich ist, bei der wenigstens ein Teil der Monomer (M2) ausgewählt ist unter Estern der Phosphorsäure mit gegebenenfalls alkoxylierten Hydroxyalkyl(meth)acrylaten und Mischungen davon.

**15.** Polymerdispersion (PD) nach einem der Ansprüche 12 bis 14, worin das Polymer (P) durch eine Emulsionspolymerisation erhältlich ist, bei der wenigstens ein Teil der Monomer (M2) ausgewählt ist unter Monoestern der Phosphorsäure mit gegebenenfalls alkoxylierten Hydroxyalkyl(meth)acrylaten.

**16.** Polymerdispersion (PD) nach einem der Ansprüche 12 bis 15, enthaltend bis zu 20 Gew.-% wenigstens eines Emulgators (E), bezogen auf das Gesamtgewicht der zur Emulsionspolymerisation eingesetzten Monomere.

**17.** Polymerdispersion (PD) nach einem der Ansprüche 10 bis 16, wobei als Komponente (M1.a) eine Mischung aus n-Butylacrylat und Methylmethacrylat eingesetzt wird.

**18.** Polymerdispersion (PD) nach einem der Ansprüche 17, wobei die Monomere (M1.b) ausgewählt sind unter Acrylsäure, Methacrylsäure, Acrylamid, Methacrylamid und Mischungen davon.

**19.** Anstrichmittel in Form einer wässrigen Zusammensetzung, enthaltend

- wenigstens eine Polymerdispersion (PD), wie in einem der Ansprüche 12 bis 18 definiert,
- wenigstens einen anorganischen Füllstoff und/oder wenigstens ein anorganisches Pigment,
- wenigstens ein übliches Hilfsmittel, und
- Wasser.

**Claims**

**1.** The use of a polymer dispersion (PD) comprising:

i) at least one polymer (P) obtainable by freeradical emulsion polymerization of at least one ethylenically unsaturated monomer (M1) and at least one monomer (M2) different therefrom and selected from esters of phosphonic acid or of phosphoric acid with unalkoxylated or alkoxylated hydroxyalkyl (meth)acrylates, and

ii) at least one emulsifier (E) selected from compounds of the formula (I)

$$R^1\text{-O-}(AO)_m\text{-}P(=O)(OR^2)(OH) \qquad (I)$$

in which

m is an integer from 0 to 20,
AO is alkyleneoxy,
$R^1$ is $C_8$-$C_{30}$ alkyl, and
$R^2$ is H or a group -$(AO)_m$-$R^{2a}$, in which $R^{2a}$ is as defined for $R^1$, and AO and m have one of the above definitions,

and the salts of the compounds of the formula (I);

in a coating material to improve the scrub resistance of the coatings produced therefrom and/or to improve the burnish resistance of the coatings produced therefrom and/or to improve the stain resistance of the coatings produced therefrom and/or to improve the pigment distribution in the coatings produced therefrom and/or to reduce the emission of volatile organic compounds by the coatings produced therefrom,
the polymer (P) being obtainable by an emulsion polymerization in which the fraction of monomers (M1) is in the range from 95% to 99.99% by weight, based on the total weight of the monomers used for the emulsion polymerization, the monomers (M1) being selected exclusively from the principal monomers (M1.a) and the secondary monomers (M1.b),
and where at least 50% by weight of the monomers (M1), based on the total weight of the monomers (M1), are selected from esters of $\alpha,\beta$-ethylenically unsaturated monocarboxylic and dicarboxylic acids with $C_1$-$C_{30}$ alkanols, esters of vinyl alcohol or allyl alcohol with $C_1$-$C_{30}$ monocarboxylic acids, ethylenically unsaturated nitriles, vinyl halides, vinylidene halides, and mixtures thereof (= monomers M1.a),
and where less than 50% by weight of monomers (M1), based on the total weight of the monomers (M1), are selected from ethylenically unsaturated monocarboxylic and dicarboxylic acids, the anhydrides and monoesters of ethylenically unsaturated dicarboxylic acids, (meth)acrylamides, $C_1$-$C_{10}$ hydroxyalkyl (meth) acrylates, $C_1$-$C_{10}$ hydroxyalkyl (meth)acrylamides and mixtures thereof (= monomers M1.b).

**2.** The use according to claim 1, the polymer (P) being obtainable by an emulsion polymerization in which at least some of the monomers (M1) are selected from esters of $\alpha,\beta$-ethylenically unsaturated monocarboxylic and dicarboxylic acids with $C_1$-$C_{30}$ alkanols.

**3.** The use according to either of the preceding claims, the polymer (P) being obtainable by an emulsion polymerization in which at least 60%, and preferably at least 80% by weight of the monomers (M1), based on the total weight of the monomers (M1), are selected from esters of $\alpha,\beta$-ethylenically unsaturated monocarboxylic and dicarboxylic acids with $C_1$-$C_{30}$ alkanols, esters of vinyl alcohol or allyl alcohol with $C_1$-$C_{30}$ monocarboxylic acids, ethylenically unsaturated nitriles, vinyl halides, vinylidene halides, and mixtures thereof (= monomers M1.a).

**4.** The use according to any of the preceding claims, the polymer (P) being obtainable by an emulsion polymerization in which less than 40%, preferably less than 20% by weight of monomers (M1), based on the total weight of the monomers (M2), are selected from ethylenically unsaturated monocarboxylic and dicarboxylic acids, the anhydrides and monoesters of ethylenically unsaturated dicarboxylic acids, (meth)acrylamides, $C_1$-$C_{10}$ hydroxyalkyl (meth)acrylates, $C_1$-$C_{10}$ hydroxyalkyl (meth)acrylamides and mixtures thereof (= monomers M1.b).

5. The use according to any of the preceding claims, the polymer (P) being obtainable by an emulsion polymerization in which at least some of the monomers (M2) are selected from esters of phosphoric acid with unalkoxylated or alkoxylated hydroxyalkyl (meth)acrylates and mixtures thereof.

6. The use according to claim 5, the polymer (P) being obtainable by an emulsion polymerization in which at least some of the monomers (M2) are selected from monoesters of phosphoric acid with unalkoxylated or alkoxylated hydroxyalkyl (meth)acrylates.

7. The use according to any of the preceding claims, the polymer (P) being obtainable by an emulsion polymerization in which the fraction of monomers (M2) is in the range from 0.01% to 5% by weight, based on the total weight of the monomers used for the emulsion polymerization.

8. The use according to any of the preceding claims, the polymer dispersion (PD) comprising up to 20% by weight, based on the total weight of the monomers used for the emulsion polymerization, of at least one emulsifier (E).

9. The use according to any of the preceding claims, a mixture of n-butyl acrylate and methyl methacrylate being used as component (M1.a).

10. The use according to claim 9, the monomers (M1.b) being selected from acrylic acid, methacrylic acid, acrylamide, methacrylamide and mixtures thereof.

11. A coating material comprising a polymer dispersion (PD), the polymer dispersion (PD) comprising:

i) at least one polymer (P) obtainable by free-radical emulsion polymerization of at least one ethylenically unsaturated monomer (M1) and at least one monomer (M2) different therefrom and selected from esters of phosphonic acid or of phosphoric acid with unalkoxylated or alkoxylated hydroxyalkyl (meth)acrylates, and
ii) at least one emulsifier (E) selected from compounds of the formula (I)

$$R^1\text{-O-}(AO)_m\text{-P(=O)(}OR^2\text{)(OH)} \qquad (I)$$

in which

m is an integer from 0 to 20,
AO is alkyleneoxy,
$R^1$ is $C_8$-$C_{30}$ alkyl, and
$R^2$ is H or a group -$(AO)_m$-$R^{2a}$, in which $R^{2a}$ is as defined for $R^1$, and AO and m have one of the above definitions,

and the salts of the compounds of the formula (I); and

the polymer dispersion (PD) being used to improve the scrub resistance of coatings produced from the coating material and/or to improve the burnish resistance of coatings produced from the coating material and/or to improve the stain resistance of coatings produced from the coating material and/or to improve the pigment distribution in coatings produced from the coating material and/or to reduce the emission of volatile organic compounds by coatings produced from the coating material,
the polymer (P) being obtainable by an emulsion polymerization in which the fraction of monomers (M1) is in the range from 95% to 99.99% by weight, based on the total weight of the monomers used for the emulsion polymerization, the monomers (M1) being selected exclusively from the principal monomers (M1.a) and the secondary monomers (M1.b),
and where at least 50% by weight of the monomers (M1), based on the total weight of the monomers (M1), are selected from esters of $\alpha,\beta$-ethylenically unsaturated monocarboxylic and dicarboxylic acids with $C_1$-$C_{30}$ alkanols, esters of vinyl alcohol or allyl alcohol with $C_1$-$C_{30}$ monocarboxylic acids, ethylenically unsaturated nitriles, vinyl halides, vinylidene halides, and mixtures thereof (= monomers M1.a),
and where less than 50% by weight of monomers (M1), based on the total weight of the monomers (M1), are selected from ethylenically unsaturated monocarboxylic and dicarboxylic acids, the anhydrides and monoesters of ethylenically unsaturated dicarboxylic acids, (meth)acrylamides, $C_1$-$C_{10}$ hydroxyalkyl (meth) acrylates, $C_1$-$C_{10}$ hydroxyalkyl (meth)acrylamides and mixtures thereof (= monomers M1.b).

**12.** A polymer dispersion (PD) comprising:

i) at least one polymer (P) obtainable by free-radical emulsion polymerization of a monomer composition comprising:

- 95% to 99.99% by weight, based on the total weight of the monomers used for the emulsion polymerization, of an ethylenically unsaturated monomer (M1); and
- 0.01% to 5% by weight, based on the total weight of the monomers used for the emulsion polymerization, of at least one monomer (M2) different therefrom and selected from esters of phosphonic acid or of phosphoric acid with unalkoxylated or alkoxylated hydroxyalkyl (meth)acrylates; and

ii) at least one emulsifier (E) selected from compounds of the formula (I) and the salts of the compounds of the formula (I),

$$R^1\text{-O-}(AO)_m\text{-P(=O)(OR}^2)(OH) \qquad (I)$$

in which

m is an integer from 0 to 20,
AO is alkyleneoxy,
$R^1$ is $C_8$-$C_{30}$ alkyl, and
$R^2$ is H or a group -$(AO)_m$-$R^{2a}$, in which $R^{2a}$ is as defined for $R^1$, and AO and m have one of the above definitions,

the monomers (M1) being selected exclusively from the principal monomers (M1.a) and the secondary monomers (M1.b),

and where at least 50% by weight of the monomers (M1), based on the total weight of the monomers (M1), are selected from esters of $\alpha,\beta$-ethylenically unsaturated monocarboxylic and dicarboxylic acids with $C_1$-$C_{30}$ alkanols, esters of vinyl alcohol or allyl alcohol with $C_1$-$C_{30}$ monocarboxylic acids, ethylenically unsaturated nitriles, vinyl halides, vinylidene halides, and mixtures thereof (= monomers M1.a),
and where less than 50% by weight of monomers (M1), based on the total weight of the monomers (M1), are selected from ethylenically unsaturated monocarboxylic and dicarboxylic acids, the anhydrides and monoesters of ethylenically unsaturated dicarboxylic acids, (meth)acrylamides, $C_1$-$C_{10}$ hydroxyalkyl (meth) acrylates, $C_1$-$C_{10}$ hydroxyalkyl (meth)acrylamides and mixtures thereof (= monomers M1.b).

**13.** The polymer dispersion (PD) according to claim 12, wherein the polymer (P) is obtainable by an emulsion polymerization in which at least some of the monomers (M1) are selected from esters of $\alpha,\beta$-ethylenically unsaturated monocarboxylic and dicarboxylic acids with $C_1$-$C_{30}$ alkanols.

**14.** The polymer dispersion (PD) according to either of claims 12 and 13, wherein the polymer (P) is obtainable by an emulsion polymerization in which at least some of the monomers (M2) are selected from esters of phosphoric acid with unalkoxylated or alkoxylated hydroxyalkyl (meth)acrylates and mixtures thereof.

**15.** The polymer dispersion (PD) according to any of claims 12 to 14, wherein the polymer (P) is obtainable by an emulsion polymerization in which at least some of the monomers (M2) are selected from monoesters of phosphoric acid with unalkoxylated or alkoxylated hydroxyalkyl (meth)acrylates.

**16.** The polymer dispersion (PD) according to any of claims 12 to 15, comprising up to 20% by weight of at least one emulsifier (E), based on the total weight of the monomers used for the emulsion polymerization.

**17.** The polymer dispersion (PD) according to any of claims 10 to 16, a mixture of n-butyl acrylate and methyl methacrylate being used as component (M1.a).

**18.** The polymer dispersion (PD) according to any of claims 17, the monomers (M1.b) being selected from acrylic acid, methacrylic acid, acrylamide, methacrylamide and mixtures thereof.

**19.** A coating material in the form of an aqueous composition, comprising:

- at least one polymer dispersion (PD) as defined in any of claims 12 to 18,
- at least one inorganic filler and/or at least one inorganic pigment,
- at least one typical auxiliary, and
- water.

**Revendications**

**1.** Utilisation d'une dispersion de polymères (PD), contenant :

i) au moins un polymère (P), pouvant être obtenu par polymérisation radicalaire en émulsion d'au moins un monomère (M1) éthyléniquement insaturé et d'au moins un monomère (M2) différent de celui-ci, qui est choisi parmi les esters de l'acide phosphonique ou de l'acide phosphorique avec des (méth)acrylates d'hydroxyalkyle le cas échéant alcoxylés et

ii) au moins un émulsifiant (E), choisi parmi les composés de formule (1)

$$R^1\text{-}O\text{-}(AO)_m\text{-}P(=O)(OR^2)(OH) \qquad (I)$$

dans laquelle

m vaut un nombre entier de 0 à 20,
AO représente alkylénoxy,
$R^1$ représente $C_8$-$C_{30}$-alkyle et
$R^2$ représente H ou un groupe $\text{-}(AO)_m\text{-}R^{2a}$, dans lequel $R^{2a}$ présente la signification indiquée pour $R^1$ et AO et m présentent une des significations indiquées ci-dessus,

et les sels des composés de formule (I) ;

dans des peintures pour améliorer la résistance à l'abrasion des couches de peinture réalisées à partir de celles-ci et/ou pour améliorer la résistance au polissage des couches de peinture réalisées à partir de celles-ci et/ou pour améliorer la résistance aux taches des couches de peinture réalisées à partir de celles-ci et/ou pour améliorer la répartition des pigments dans les couches de peinture réalisées à partir de celles-ci et/ou pour réduire l'émission de composés organiques volatils par les couches de peinture réalisées à partir de celles-ci, le polymère (P) pouvant être obtenu par une polymérisation en émulsion, lors de laquelle la proportion des monomères (M1) se situe dans la plage de 95 à 99,99% en poids, par rapport au poids total des monomères utilisés pour la polymérisation en émulsion, les monomères (M1) étant exclusivement choisis parmi les monomères principaux (M1.a) et les monomères secondaires (M1.b), et au moins 50% en poids des monomères (M1), par rapport au poids total des monomères (M1), étant choisis parmi les esters d'acides monocarboxyliques et dicarboxyliques éthyléniquement $\alpha,\beta$-insaturés avec des $C_1$-$C_{30}$-alcanols, les esters de l'alcool vinylique ou allylique avec des acides $C_1$-$C_{30}$-monocarboxyliques, les nitriles éthyléniquement insaturés, les halogénures de vinyle, les halogénures de vinylidène et les mélanges de ceux-ci (= monomères M1.a), et moins de 50% en poids des monomères (M1), par rapport au poids total des monomères (M1), étant choisis parmi les acides monocarboxyliques et dicarboxyliques éthyléniquement insaturés, les anhydrides et les semi-esters d'acides dicarboxyliques éthyléniquement insaturés, les (méth)acrylamides, les (méth) acrylates de $C_1$-$C_{10}$-hydroxyalkyle, les $C_1$-$C_{10}$-hydroxyalkyl(méth)acrylamides et les mélanges de ceux-ci (= monomères M1.b).

**2.** Utilisation selon la revendication 1, le polymère (P) pouvant être obtenu par une polymérisation en émulsion, lors de laquelle au moins une partie de monomères (M1) est choisie parmi les esters d'acides monocarboxyliques et dicarboxyliques éthyléniquement $\alpha,\beta$-insaturés avec des $C_1$-$C_{30}$-alcanols.

**3.** Utilisation selon l'une quelconque des revendications précédentes, le polymère (P) pouvant être obtenu par une polymérisation en émulsion, lors de laquelle au moins 60% en poids et de préférence au moins 80% en poids des monomères (M1), par rapport au poids total des monomères (M1), sont choisis parmi les esters d'acides monocarboxyliques et dicarboxyliques éthyléniquement α,β-insaturés avec des $C_1$-$C_{30}$-alcanols, les esters de l'alcool vinylique ou allylique avec des acides $C_1$-$C_{30}$-monocarboxyliques, les nitriles éthyléniquement insaturés, les halogénures de vinyle, les halogénures de vinylidène et les mélanges de ceux-ci (= monomères M1.a).

4. Utilisation selon l'une quelconque des revendications précédentes, le polymère (P) pouvant être obtenu par une polymérisation en émulsion, lors de laquelle moins de 40% en poids, de préférence moins de 20% en poids des monomères (M1), par rapport au poids total des monomères (M1), sont choisis parmi les acides monocarboxyliques et dicarboxyliques éthyléniquement insaturés, les anhydrides et les semi-esters d'acides dicarboxyliques éthyléniquement insaturés, les (méth)acrylamides, les (méth)acrylates de $C_1$-$C_{10}$-hydroxyalkyle, les $C_1$-$C_{10}$-hydroxyalkyl(méth)acrylamides et les mélanges de ceux-ci (= monomères M1.b).

5. Utilisation selon l'une quelconque des revendications précédentes, le polymère (P) pouvant être obtenu par une polymérisation en émulsion, lors de laquelle au moins une partie des monomères (M2) est choisie parmi les esters de l'acide phosphorique avec des (méth)acrylates d'hydroxyalkyle le cas échéant alcoxylés et les mélanges de ceux-ci.

6. Utilisation selon la revendication 5, le polymère (P) pouvant être obtenu par une polymérisation en émulsion, lors de laquelle au moins une partie des monomères (M2) est choisie parmi les monoesters de l'acide phosphorique avec des (méth)acrylates d'hydroxyalkyle le cas échéant alcoxylés.

7. Utilisation selon l'une quelconque des revendications précédentes, le polymère (P) pouvant être obtenu par une polymérisation en émulsion, lors de laquelle la proportion de monomères (M2) se situe dans la plage de 0,01 à 5% en poids, par rapport au poids total des monomères utilisés pour la polymérisation en émulsion.

8. Utilisation selon l'une quelconque des revendications précédentes, la dispersion de polymères (PD) contenant jusqu'à 20% en poids, par rapport au poids total des monomères utilisés pour la polymérisation en émulsion, d'au moins un émulsifiant (E).

9. Utilisation selon l'une quelconque des revendications précédentes, un mélange d'acrylate de n-butyle et de méthacrylate de méthyle étant utilisé comme composant (M1.a).

10. Utilisation selon la revendication 9, les monomères (M1.b) étant choisis parmi l'acide acrylique, l'acide méthacrylique, l'acrylamide, le méthacrylamide et les mélanges de ceux-ci.

11. Peinture contenant une dispersion de polymères (PD), la dispersion de polymères (PD) contenant :

i) au moins un polymère (P), pouvant être obtenu par polymérisation radicalaire en émulsion d'au moins un monomère (M1) éthyléniquement insaturé et d'au moins un monomère (M2) différent de celui-ci, qui est choisi parmi les esters de l'acide phosphonique ou de l'acide phosphorique avec des (méth)acrylates d'hydroxyalkyle le cas échéant alcoxylés et
ii) au moins un émulsifiant (E), choisi parmi les composés de formule (1)

$$R^1\text{-O-}(AO)_m\text{-P}(=O)(OR^2)(OH) \qquad (I)$$

dans laquelle

m vaut un nombre entier de 0 à 20,
AO représente alkylénoxy,
$R^1$ représente $C_8$-$C_{30}$-alkyle et
$R^2$ représente H ou un groupe $-(AO)_m$-$R^{2a}$, dans lequel $R^{2a}$ présente la signification indiquée pour $R^1$ et AO et m présentent une des significations indiquées ci-dessus,

et les sels des composés de formule (I) ; et

la dispersion de polymères (PD) étant utilisée pour améliorer la résistance à l'abrasion des couches de peinture réalisées à partir des peintures et/ou pour améliorer la résistance au polissage des couches de peinture réalisées à partir des peintures et/ou pour améliorer la résistance aux taches des couches de peinture réalisées à partir des peintures et/ou pour améliorer la répartition des pigments dans les couches de peinture réalisées à partir des peintures et/ou pour réduire l'émission de composés organiques volatils par les couches de peinture réalisées à partir des peintures,

le polymère (P) pouvant être obtenu par une polymérisation en émulsion, dans laquelle la proportion des monomères (M1) se situe dans la plage de 95 à 99,99% en poids, par rapport au poids total des monomères utilisés pour la polymérisation en émulsion, les monomères (M1) étant exclusivement choisis parmi les monomères principaux (M1.a) et les monomères secondaires (M1.b),

et au moins 50% en poids des monomères (M1), par rapport au poids total des monomères (M1), étant choisis parmi les esters d'acides monocarboxyliques et dicarboxyliques éthyléniquement $\alpha,\beta$-insaturés avec des $C_1$-$C_{30}$-alcanols, les esters de l'alcool vinylique ou allylique avec des acides $C_1$-$C_{30}$-monocarboxyliques, les nitriles éthyléniquement insaturés, les halogénures de vinyle, les halogénures de vinylidène et les mélanges de ceux-ci (= monomères M1.a),

et moins de 50% en poids des monomères (M1), par rapport au poids total des monomères (M1), étant choisis parmi les acides monocarboxyliques et dicarboxyliques éthyléniquement insaturés, les anhydrides et les semi-esters d'acides dicarboxyliques éthyléniquement insaturés, les (méth)acrylamides, les (méth) acrylates de $C_1$-$C_{10}$-hydroxyalkyle, les $C_1$-$C_{10}$-hydroxyalkyl(méth)acrylamides et les mélanges de ceux-ci (= monomères M1.b).

**12.** Dispersion de polymères (PD) contenant :

i) au moins un polymère (P) pouvant être obtenu par polymérisation radicalaire en émulsion d'une composition de monomères contenant :

- 95 à 99,99% en poids, par rapport au poids total des monomères utilisés pour la polymérisation en émulsion, d'un monomère (M1) éthyléniquement insaturé ; et
- 0,01 à 5% en poids, par rapport au poids total des monomères utilisés pour la polymérisation en émulsion, d'au moins un monomère (M2) différent de celui-ci, qui est choisi parmi les esters de l'acide phosphonique ou de l'acide phosphorique avec des (méth)acrylates d'hydroxyalkyle le cas échéant alcoxylés ; et

ii) au moins un émulsifiant (E), choisi parmi les composés de formule (I) et les sels des composés de formule (I),

$$R^1\text{-}O\text{-}(AO)_m\text{-}P(=O)(OR^2)(OH) \qquad (I)$$

dans laquelle

m vaut un nombre entier de 0 à 20,
AO représente alkylénoxy,
$R^1$ représente $C_8$-$C_{30}$-alkyle et
$R^2$ représente H ou un groupe -$(AO)_m$-$R^{2a}$, dans lequel $R^{2a}$ présente la signification indiquée pour $R^1$ et AO et m présentent une des significations indiquées ci-dessus,

les monomères (M1) étant exclusivement choisis parmi les monomères principaux (M1.a) et les monomères secondaires (M1.b),

et au moins 50% en poids des monomères (M1), par rapport au poids total des monomères (M1), étant choisis parmi les esters d'acides monocarboxyliques et dicarboxyliques éthyléniquement $\alpha,\beta$-insaturés avec des $C_1$-$C_{30}$-alcanols, les esters de l'alcool vinylique ou allylique avec des acides $C_1$-$C_{30}$-monocarboxyliques, les nitriles éthyléniquement insaturés, les halogénures de vinyle, les halogénures de vinylidène et les mélanges de ceux-ci (= monomères M1.a),

et moins de 50% en poids des monomères (M1), par rapport au poids total des monomères (M1), étant choisis parmi les acides monocarboxyliques et dicarboxyliques éthyléniquement insaturés, les anhydrides et les semi-esters d'acides dicarboxyliques éthyléniquement insaturés, les (méth)acrylamides, les (méth) acrylates de $C_1$-$C_{10}$-hydroxyalkyle, les $C_1$-$C_{10}$-hydroxyalkyl(méth)acrylamides et les mélanges de ceux-ci (= monomères M1.b).

**13.** Dispersion de polymères (PD) selon la revendication 12, dans laquelle le polymère (P) peut être obtenu par une polymérisation en émulsion, lors de laquelle au moins une partie de monomères (M1) est choisie parmi les esters d'acides monocarboxyliques et dicarboxyliques éthyléniquement $\alpha,\beta$-insaturés avec des $C_1$-$C_{30}$-alcanols.

**14.** Dispersion de polymères (PD) selon l'une quelconque des revendications 12 ou 13, dans laquelle le polymère (P) peut être obtenu par une polymérisation en émulsion, lors de laquelle au moins une partie des monomères (M2) est choisie parmi les esters de l'acide phosphorique avec des (méth)acrylates d'hydroxyalkyle le cas échéant alcoxylés et les mélanges de ceux-ci.

15. Dispersion de polymères (PD) selon l'une quelconque des revendications 12 à 14, dans laquelle le polymère (P) peut être obtenu par une polymérisation en émulsion, lors de laquelle au moins une partie des monomères (M2) est choisie parmi les monoesters de l'acide phosphorique avec des (méth)acrylates d'hydroxyalkyle le cas échéant alcoxylés.

16. Dispersion de polymères (PD) selon l'une quelconque des revendications 12 à 15, contenant jusqu'à 20% en poids d'au moins un émulsifiant (E), par rapport au poids total des monomères utilisés pour la polymérisation en émulsion.

17. Dispersion de polymères (PD) selon l'une quelconque des revendications 10 à 16, un mélange d'acrylate de n-butyle et de méthacrylate de méthyle étant utilisé comme composant (M1.a).

18. Dispersion de polymères (PD) selon l'une quelconque des revendications 17, les monomères (M1.b) étant choisis parmi l'acide acrylique, l'acide méthacrylique, l'acrylamide, le méthacrylamide et les mélanges de ceux-ci.

19. Peinture sous forme d'une composition aqueuse, contenant :

- au moins une dispersion de polymères (PD), telle que définie dans l'une quelconque des revendications 12 à 18,
- au moins une charge inorganique et/ou au moins un pigment inorganique,
- au moins un adjuvant usuel et
- de l'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0960889 A
- EP 1274738 A
- EP 1725595 A
- EP 1762601 A
- EP 1832635 A
- EP 1997839 A1
- WO 2005030495 A2
- WO 2005097853 A1
- WO 2006026379 A1
- EP 1988105 A1
- WO 2009085593 A2
- DE 2722097 A
- US 4226007 A
- DE 2061213 A
- DE 2207209 A
- WO 9325588 A
- US 4269749 A

### In der Beschreibung aufgeführte Nicht-Patentliteratur

- **U. POTH.** *Polyester und Alkydharze, Vincentz Network,* 2005, 183 f
- **K. C. BERGER ; G. BRANDRUP ; J. BRANDRUP ; E. H. IMMERGUT.** Polymer Handbook. John Wiley & Sons, 1989, II/81-II/141
- Methoden der organischen Chemie. **HOUBEN-WEYL.** Makromolekulare Stoffe. Georg Thieme Verlag, 1961, vol. XIV/1, 411-420
- Methoden der organischen Chemie. **HOUBEN-WEYL.** Makromolekulare Stoffe. Georg Thieme Verlag, 1961, vol. 14/1, 192-208
- Methoden der organischen Chemie. **HOUBEN-WEYL.** Makromolekulare Stoffe. Georg-Thieme-Verlag, 1961, vol. XIV/1, 192-208
- Ullmanns Enzyklopädie der technischen Chemie. vol. 15, 667